# EUROPEAN PATENT SPECIFICATION

(11) **EP 1 949 611 B1**
(45) Date of publication and mention of the grant of the patent: **12.06.2013**
(21) Application number: 06839855.1
(22) Date of filing: 13.11.2006
(51) Int. Cl.: H04W 40/28, H04L 12/715, H04L 12/717, H04L 12/753, H04W 40/32

(54) **SYSTEM AND METHOD FOR SPANNING TREE CROSS ROUTES**
SYSTEM UND VERFAHREN FÜR SPANNING-TREE-CROSS-ROUTEN
SYSTÈME ET PROCÉDÉ PERMETTANT D'ÉTABLIR DES CHEMINS TRANSVERSAUX DANS UN ARBRE MAXIMAL

(30) Priority: 14.11.2005 US 273118
(43) Date of publication of application: 30.07.2008
(73) Proprietor: Cisco Technology, Inc., San Jose, CA 95134-1706 (US)
(72) Inventor: MEIER, Robert C., Cuyahoga Falls, Ohio 44223 (US)
(74) Representative: Kazi, Ilya
(86) International application number: PCT/US2006/060828
(87) International publication number: WO 2007/059460

(56) References cited:
- US-A1- 2003 037 167
- US-A1- 2004 131 042
- US-A1- 2004 233 882
- US-A1- 2005 036 486
- US-A1- 2005 036 486
- US-A1- 2005 220 054
- US-A1- 2005 220 054
- US-B2- 6 917 985

## Description

### BACKGROUND OF THE INVENTION

The present invention relates generally to wireless mobile ad hoc networking, such as a mesh network, and more particularly to a protocol for efficient routing for a mobile ad hoc wireless network.

Mesh networking protocols are used to dynamically establish "routes" between mobile nodes (MNs) in a Mobile Ad Hoc Network (MANET). The Dynamic MANET On-demand (DYMO) Routing protocol [1] and the Ad Hoc On-Demand Distance Vector (AODV) protocol [2] are examples of mesh networking protocols. A mesh network may be bridged to an "infrastructure network," through one or more "portals".

A "spanning tree" is a common networking data structure that is used to prevent routing loops in a network with cyclical physical paths. Spanning tree protocols have been used to prevent loops in wireless networks (including Cisco/Aironet/Telesystems wireless networks) for many years. General strengths and weaknesses of wireless spanning tree protocols and mesh routing protocols are summarized below:
- A mesh protocol typically establishes a least-coast path between any two MNs in a mesh network. A wireless spanning tree protocol (WSTP) establishes the least-cost path from each MN to the spanning tree root, but it does NOT establish the least-cost path between any two MNs.
- Broadcast/multicast flooding is problematic in mesh-only networks, because it is difficult to prevent broadcast/multicast packets from looping; MNs may receive multiple copies of the same broadcast/multicast packet. Broadcast/multicast flooding is straight-forward in a spanning tree topology - broadcast/multicast packets are only flooded on spanning tree branches.
   In general, all nodes must participate in a mesh routing protocol. In general, leaf nodes (i.e. simple stations) do NOT need to participate in a WSTP.
- A WSTP implementation can be relatively simple compared to a mesh protocol implementation.
- Frames are explicitly "routed" through both mesh networks and wireless spanning tree networks. In a spanning tree topology, routes are determined by the underlying spanning tree. In a mesh network, a node must "discover" a route to a correspondent node. "Route discovery" packets are often flooded throughout a mesh network; therefore, a mesh network protocol can be relatively "chatty".

The IEEE 802.11s working group is currently developing a standard for organizing 802.11 nodes into a mesh network. An 802.11s mesh network may be bridged to an infrastructure wired LAN through one or more "portals". A well-known mesh networking protocol is the Ad-hoc On-demand Distance Vector (AODV) mesh routing protocol. (AODV) is capable of both unicast and multicast routing. (AODV) is a reactive routing protocol, meaning that it establishes a route to a destination only on demand. In contrast, the most common routing protocols of the Internet are proactive, meaning they find routing paths independently of the usage of the paths. AODV is, as the name indicates, a distance-vector protocol.

Using (AODV), when a network node needs a connection with a peer node, the node broadcasts a route discovery request, for the peer node, to each of its neighbors. When other AODV nodes receive this message they record the node that they heard it from and forward it to each of their other neighbors, potentially creating an explosion of route discovery messages and corresponding temporary routes. A node that already has a route to the peer node, or the peer node itself, sends a route discovery reply message backwards through a temporary route to the requesting node. The requesting node may receive multiple route discovery reply messages. The requesting node then begins using the route that has the least number of hops through other nodes. When a link fails, a routing error is passed back to a transmitting node, and the process repeats.

Much of the complexity of the (AODV) protocol is due to the algorithm that is used to detect and discard old, stale route discovery messages. Each request for a route has a sequence number. Nodes use this sequence number so that they do not repeat route requests that they have already passed on and to detect and discard otd, stale route discovery messages. Another such feature is that the route requests have a "time to live" number that limits how many times they can be retransmitted. Another such feature is that if a route request fails, another route request may not be sent until twice as much time has passed as the timeout of the previous route request.

AODV has several inherent problems that are common to many mesh networking protocols:
1) The route discovery process may result in an explosion of messages, as described above_{.}
2) A node may receive multiple copies of the same broadcast/multicast packet; therefore, a node must maintain a history of previously received broadcast/multicst packet so that it can detect and discard duplicate broadcast/multicast packets. The history may require substantial memory and the processing overhead to examine the history on each received broadcast/multicast frame may be substantial.
3) All nodes in an AODV mesh network must participate in the AODV protocol. The requirement that all nodes in a mesh network must participate in the AODV protocol is a severe limitation as it would be preferable that networks can support both mesh aware and mesh unaware nodes.
4) The AODV specification indicates that support for more than one portal to an infrastructure network requires some undefined external protocol. [The AODV specification refers to a "portal" as an "infrastructure router".] It is preferable that a mesh network can be attached to an infrastructure network through multiple portals.
5) In an AODV mesh network (or any mesh network) a packet cannot be sent from a source mesh node to a destination mesh node until a mesh route between the nodes is established. However, a source node cannot definitely determine if a destination node is in the same mesh network or in some external network accessed via a portal. Likewise, in an AODV mesh network, the portal cannot always determine if a destination node is in the mesh network or in an external network. It may not be possible to establish a mesh route to a mesh node that is temporarily disconnected from the mesh network, for example. The portal will function as a "black hole" if packets for such a disconnected mesh node are simply forwarded to the portal, by default. Therefore, mesh nodes must periodically reinitiate the route discovery process for correspondent nodes that are accessed via the portal.

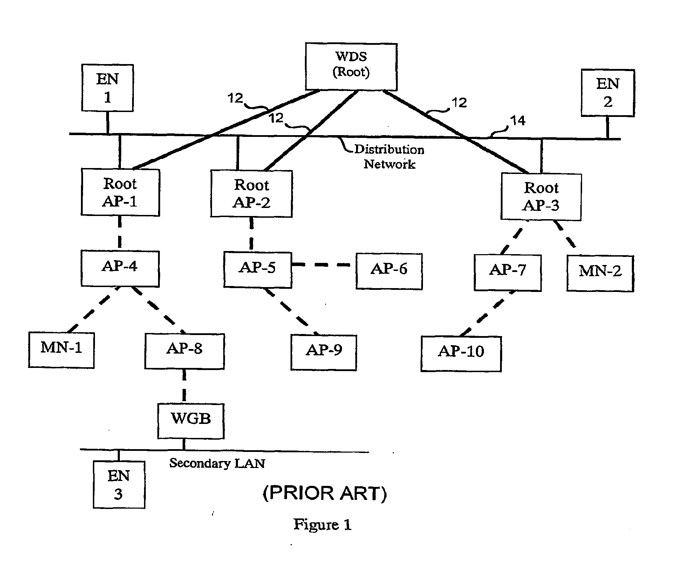

The existing Cisco Wireless LAN Context Control Protocol (WLCCP), described in U.S. Patent Application US 2004-103282, available from Cisco System, s Inc., 170 West Tasman, Drive, San Jose, California 95134 is used to manage data paths, and other context, in a Cisco SWAN (Structured Wireless- aware Network) network. A WLCCP network is organized into a network topology tree. A simple SWAN network is comprised of an Ethernet "Distribution Network" 14, an elected Wireless Domain Server (WDS), Root APs, Repeater APs, Mobile Nodes (M Ns), Work Group Bridges (WGBs), and secondary Ethernet LANs. An example SWAN network topology tree shown is shown below in Figure 1.

The WDS (the root node), by definition, is attached to distribution network 14. A Root AP is also attached to distribution network 14 and is a direct child of the WDS. A WGB, Repeater AP1 or MN is attached to distribution network 14 over one or more wireless links. A secondary LAN is attached to the network via a WGB. A single WGB is elected as the "designated WGB" for a secondary LAN. Off-the-shelf Ethernet nodes are attached to a secondary LAN. The WGB provides a "portal" and provides proxy WLCCP services for nodes on a secondary LAN. The distribution network 14 can be an Ethernet LAN, an IP network, a combination of both, or any one or more suitably network topologies. A WLCCP "campus topology" may include multiple "wireless domains", where each wireless domain is controlled by a separate WDS. Other example WLCCP topologies can be found in the specification of U.S. Patent Application US 2004-0103282.

Repeater APs, MNs, WGBs, and secondary LANs are organized into a "spanning sub tree" that is rooted at a Root AP. Each Root AP provides a "portal" to the distribution network for nodes in its spanning sub tree. The WSTP that is used to establish the underlying spanning sub trees, rooted at each Root AP, is 802.11 - dependent and operates independently of WLCCP. [802.11 Beacons, transmitted by Cisco 802.11 APs, contain path cost information.] WLCCP is aware of the underlying spanning tree topology.

In Figure 1, topology tree branches are depicted by lines 12. Wireless links are depicted as dashed lines. In general, frames are forwarded on spanning tree branches through the "nearest common ancestor", with one exception. The WDS is NOT in the data path. Frames can be forwarded between spanning sub trees over the distribution network. The topology tree links between the WDS and each root AP are "zero-cost" logical links.

WLCCP is used to establish and delete "path instances" that lie on branches of the underlying topology tree. Each MN, AP, WGB, and secondary LAN is reliably registered with the WDS and with each AP on the spanning tree path to the WDS. A WLCCP Registration transaction establishes a new path instance, for a node, and corresponding route table entries in APs. A WLCCP Deregistration transaction is used to delete any old path instance when a new path instance is established. When a parent AP loses a link to a child node, the parent AP originates a WLCCP Detach transaction to delete the child node's path instance.

A WLCCP path instance is uniquely identified by a "Path ID" assigned by the WDS in an "initial" Registration Reply message. Path IDs are contained in "update" Registration messages, Deregistration messages, and Detach messages to prevent out-of-order path updates. Out-of-order path update messages are ignored. WLCCP path update logic is described in detail in U.S. Patent Application US 2004-0103282.

A Root AP effectively provides a "portal" between the wireless network and the distribution network. A Root AP forwards unicast/broadcast/multicast frames from the distribution network outbound on branches of its spanning sub tree. A unicast frame is "routed" outbound on the path to the destination node using route table entries established by WLCCP Registration. By default, a unicast packet that originates in the wireless network is forwarded inbound on a branch of the WLCCP topology tree, until either it reaches distribution network 14 or an AP where the destination is in the AP's sub tree (i.e. the nearest common ancestor). In general, broadcast/multicast frames are flooded throughout the WLCCP topology tree. As noted above, the WDS is not in the data path and frames are never forwarded/flooded to the WDS. An IP multicast frame may only be flooded on topology tree branches where there are members in the respective multicast group.

However, WLCCP, like a wireless spanning tree protocol (WSTP), establishes the least-cost path from each MN to the distribution network, but it does not establish the least-cost path between any two MNs. Whereas a mesh protocol typically establishes a least-coast path between any two MNs in a mesh network.

US 2005/036486 discloses a method of discovering a route from a source node to a destination in an ad hoc network by having the source node generate a data packet including its source address, the destination address, and a field indicating that the source node requests route information from the source node to the destination node. The data packet is forwarded through the network until the data packet is received by the destination node. In response, the destination node generates a route reply packet including the route information.

US 2005/220054 discloses a system in which Wireless LAN Context Control Protocol (WLCCP) is used to establish and manage a wireless network topology. The WLCCP registration protocol is used to create and delete links in the network, securely distribute operational context, and reliably establish Layer 2 forwarding paths on wireless links.

### BRIEF SUMMARY OF THE INVENTION

Aspects of the invention are set out in the independent claims. Certain preferred features are set out in the dependent claims.

In accordance with an embodiment of the present invention, there is described herein a spanning tree cross-route protocol (STCRP) for establishing mesh-like cross routes in an underlying wireless tree topology. A cross route spans the branches of the topology tree to provide a more optimal route between any two nodes in the wireless network. An aspect of the present invention is that it is suitably adaptable to work with existing wireless spanning tree protocols (WSTP), path update protocols such as utilized by WLCCP and with mesh routing protocols such as (AODV). Although WLCCP and AODV are used as example path update and mesh routing protocols respectively, STCRP can work with any suitable wireless spanning tree protocol, path update protocol or mesh routing protocol.

In accordance with an embodiment of the present invention, there is disclosed herein a wireless network node. The node comprises a wireless transceiver, a cross route table and at least one port coupled to a spanning tree network. The node is configured to be responsive to receiving a packet sent from a source node addressed to a destination node to determine whether an entry exists for the destination node in the cross route table. The node is responsive to route the packet on a cross route responsive to an entry existing in the cross route table for the destination node. Moreover, the node is responsive to route the packet on at least one spanning tree port responsive to no entry existing in the cross route table for the destination node.

In accordance with an embodiment of the present invention, there is disclosed herein a method comprising maintaining a cross route table, receiving a packet on a wireless network port, the packet having a source node address and a destination node address, and determining whether a cross route entry exists for the destination node in the cross route table. The method further comprises forwarding the packet on a spanning tree port responsive to determining no cross route entry exists for the destination node address in the cross route table, and forwarding the packet on a cross link port responsive to determining a cross route entry exists for the destination node address.

In accordance with an embodiment of the present invention, there is disclosed herein a wireless networking node comprising means for receiving a wireless frame having a source address and a destination address. The node further comprises means for maintaining a cross route table and means for routing the wireless frame coupled to the means for receiving and the means for maintaining, the means for routing responsive to determining whether a cross route entry exists for the destination node in the cross route table to forwarding the packet on a cross link port responsive to determining a cross route entry exists for the destination node address, and the means for routing responsive to forwarding the packet on a spanning tree port responsive to determining no cross route entry exists for the destination node address in the cross route table.

Still other objects of the present invention will become readily apparent to those skilled in this art from the following description wherein there is shown and described a preferred embodiment of this invention, simply by way of illustration of one of the best modes best suited for to carry out the invention. As it will be realized, the invention is capable of other different embodiments and its several details are capable of modifications in various obvious aspects all without departing from the invention. Accordingly, the drawing and descriptions will be regarded as illustrative in nature and not as restrictive.

### BRIEF DESCRIPTION OF THE SEVERAL VIEWS OF THE DRAWING

The accompanying drawings incorporated in and forming a part of the specification, illustrates several aspects of the present invention, and together with the description serve to explain the principles of the invention.
FIG. 1 is a block diagram illustrating a structured wireless aware Network.
FIG. 2 is a block diagram illustrating a spanning tree cross route protocol on structured wireless-aware network.
FIG. 3 is a block diagram illustrating an example of a completely wireless ad-hoc spanning tree cross route protocol network that is not coupled to a distribution network.
FIG. 4 is a block diagram of a spanning tree cross route protocol network where the distribution network is an IP distribution network.
FIG. 5 is a block diagram of a wireless network employing a spanning tree cross route protocol.
FIG. 6 is a block system of computer system for implementing an aspect of the present invention.
FIG. 7 is a block diagram of a methodology in accordance with an aspect of the present invention.

### DETAILED DESCRIPTION OF INVENTION

Throughout this description, the preferred embodiment and examples shown should be considered as exemplars, rather than limitations, of the present invention. An aspect of the present invention is a new protocol, STCRP (Spanning Tree Cross-Route Protocol), for establishing mesh-like "cross routes" in an underlying wireless tree topology. A cross route spans branches of the topology tree to provide a more optimal route between any two nodes in the wireless network. WLCCP and AODV are used as example path update and mesh routing protocols, respectively; however, STCRP can work with any suitable wireless spanning tree protocol, path update protocol or mesh routing protocol. In addition, a new centralized mesh routing protocol is described. The centralized mesh routing protocol is much more efficient and obviates the need for a distributed mesh routing protocol such as AODV.

The STCRP is primarily intended to optimize forwarding paths in a wireless network that is connected to an infrastructure "distribution network" over multiple "portals". However, STCRP can also operate without a distribution network. The optional distribution network can be an Ethernet LAN or an IP network.

In an STCRP network, which includes a distribution network, a spanning sub tree is rooted at each portal to the distribution network. STCRP organizes the spanning sub trees, rooted at each portal, into an STCRP network topology tree. An STCRP network, which does not include a distribution network, is organized into a single spanning tree.

STCRP resolves many of the inherent problems in mesh routing protocols. Cross routes (and spanning tree routes) are reliably established for simple STCRP-unware stations (STAs). STCRP can, optionally, eliminate "route discovery" messages. For example, in the AODV protocol route discovery messages are flooded throughout a mesh network whenever a node needs to discover a new route. Spanning tree links provide default routes between any two nodes. Therefore, a node does not need to buffer frames pending the establishment of a mesh route (i.e. as in the AODV protocol). Broadcast/multicast frames are only "flooded" on spanning tree branches; therefore, broadcast/multicast frames cannot "loop". Nodes do not need to maintain a history of recently received broadcast/multicast frames (i.e. as in the AODV protocol). All "portals" to the distribution network can be active at the same time. By contrast, the AODV RFC indicates that an external protocol is needed if more than one portal is active. STCRP functions as that external protocol.

As used herein, the wireless network root (WNR) can be considered as a WLCCP WDS. A "MAP" is a WLCCP AP that supports STCRP. A "Ports" is a WLCCP "Root AP" that supports STCRP. A Mesh Point, or "MP", operates exactly as an MAP except that it does not permit client station associations. A STA is a simple STCRP-unaware mobile station.

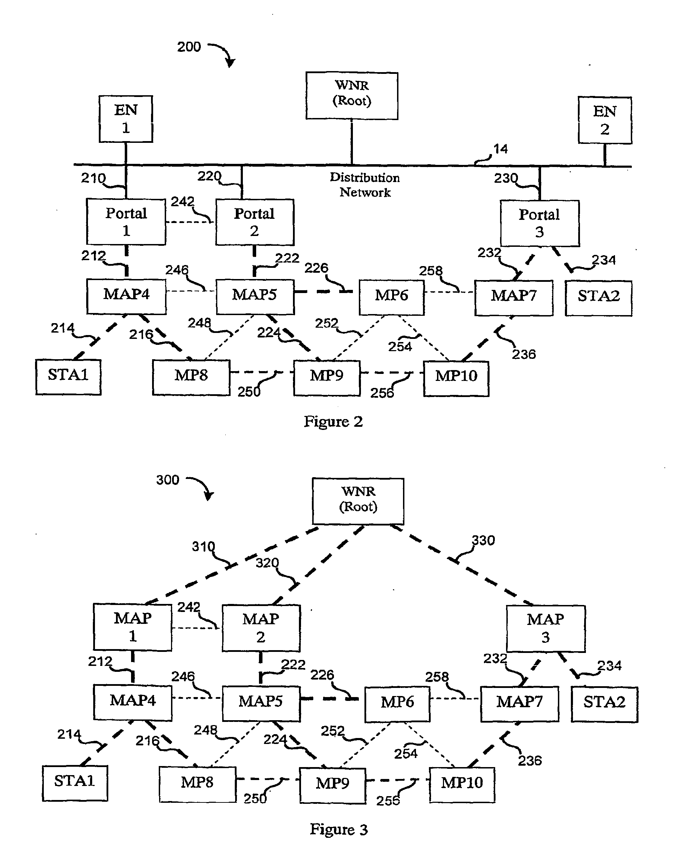

A single STCRP network, which includes a distribution network, is organized into multiple spanning "sub trees", with one spanning sub tree for each mesh portal. A "portal" is at the root of each spanning sub tree. The spanning sub tree, rooted at each portal, is established independently of any other wired or wireless spanning tree. All of the sub trees, rooted at portals, are organized into a single wireless network topology tree, with the WNR at the root of the wireless topology tree. WLCCP is used to establish and delete path instances on the underlying topology tree. STCRP can be viewed as an extension. It is used to establish "cross routes" or paths that do NOT lie on branches of the underlying topology tree. An example STCRP network topology 200 is illustrated in figure 2.

In the example topology, in figure 2, wired links are depicted as solid lines and wireless links are depicted as dashed lines. As illustrated, the wireless network is organized into 3 spanning sub trees 210, 220, 230, with a portal (Portal 1, Portal 2, Portal 3) to the distribution network at the root of each sub tree. The Wireless Network Root (WNR) is coupled to the distribution network. The WNR is NOT in the data path.

An aspect of the present invention contemplates a wireless spanning tree protocol (WSTP) that operates independently of any wired STP. The wireless spanning tree, per portal, is (re)built automatically as nodes attach to the spanning tree on the "least-cost" path to the distribution network. The wireless spanning tree prevents loops within the wireless network and it prevents wired traffic from looping through the wireless network (i.e. through multiple portals). A spanning tree branch provides a pre-established, least-cost "route" between each wireless node and the distribution network.

To optimize the forwarding path between wireless nodes, a mesh routing-protocol is used to establish "cross routes" between nodes on two different branches of the STCRP topology tree. In figure 2, a cross route 250 from MP8 to MP10 is depicted. A parent MAP provides "proxy" STCRP services to establish spanning tree links and cross routes for simple STCRP-unware STAs. Note that a cross route can span multiple spanning sub trees.

An aspect of the present invention contemplates any technique can be used for determining a cross route. For example, as will be described hererin two methods for determining a cross route are 1) centralized cross-route calculation and 2) distributed cross-route discovery.

In the example topology in figure 2, distribution network 14 can be a bridged, Ethernet LAN. However, distribution network 14 can also be an IP network or hybrid network, as will be described below herein. The WNR periodically sends multicast STCRP advertisement messages on the Ethernet distribution network 14. The layer 2 WNR advertisements are transparently bridged over the Ethernet distribution network but the WNR advertisements are not transparently bridged on wireless links. Instead, each attached AP intercepts the advertisements received on its root port and regenerates the advertisements, with an incremented path cost, on its non-root ports. A "root AP" (e.g. MAP4, MAP5, MAP7) automatically determines that its root port is a portal to the distribution network when it receives a WNR advertisement, on its root port, with a path cost of zero.

An aspect of the present invention is that all portals to the distribution network can be "active" at the same time because the WSTP prevents routing loops that span the mesh network and a wired LAN. Each of the three portals in Figure 2, for example, can actively relay frames between the mesh network and the wired distribution network.

An aspect of the present invention is that it is not necessary to flood unicast frames outbound from the distribution network onto the Mesh network. Each wireless node (MAP, MP, WGB, or STA) is reliably registered with the WNR and with each portal and MAP on the spanning tree path to the WNR. Therefore, the WNR has knowledge of all nodes in the wireless network and each portal and MAP has perfect knowledge of descendant wireless nodes in the sub tree rooted at the respective portal or MAP. In a pure mesh network if is often impossible to determine if a target node is in the mesh network; therefore, it is impossible to determine if a mesh route to a target node can be established, as described above. In contrast, it is always possible to determine if a target node is in the STCRP wireless network.

The following rules can be used to determine how frames are forwarded within the proposed mesh network:
1) A frame that is relayed from the wired distribution network into the wireless mesh network, through a portal, is only forwarded on spanning tree links (i.e. it is not forwarded on a cross route). Note that the "shortest" path from the distribution network to any node in the wireless network is always over a spanning tree branch.
2) All portals receive frames from the distribution network in promiscuous mode; however, unicast frames are not "flooded" from the distribution network into the wireless mesh network. Instead, a portal relays a unicast frame from the distribution network, if the destination address identifies a "registered" wireless node in the spanning sub tree rooted at the portal. For example, in figure 2, if EN1 sends a frame to STA1, then the frame is received both by Portal1 and Portal2. But only Portal1 relays the frame into the wireless network and onto the spanning tree branch to STA1.
3) A portal does not need to maintain "bridge table" entries for nodes on the distribution network. In general, a MAP or MP does not need to maintain route table entries for nodes on the distribution network because the inbound path to the distribution network is determined by the structure of the spanning tree (i.e. not by route table entries). By default, a frame that originates in the wireless mesh network is forwarded inbound, on a spanning tree branch, toward the topology tree root, it the destination is unknown. In figure 2, for example, Portal1 and MAP4 do not need a route table entry for EN1. If STA1 sends a frame to EN1, the frame will be forwarded inbound (i.e. on the default route) to MAP4 and then to Portal1. Portal1 will then relay the frame onto the distribution network, by default.
4) Broadcast/multicast frames are forwarded on spanning tree links. When a MAP or MP receives a broadcast/multicast frame on a first spanning tree link, it forwards the frame on each other spanning tree link (i.e. but not on "cross links"). This eliminates the need for a MAP or MP to "remember" all, recently received broadcast/multicast frames (i.e. as in the AODV protocol) because it will only receive a single copy of each frame.
5) As noted above, either a centralized or distributed mesh protocol is used to establish more optimal "cross routes" between two wireless nodes. A flag in a "mesh frame header" is used to mark frames that are forwarded on a cross route. Any frame that is forwarded on a cross route is not relayed onto the distribution network by a portal, even if an inbound frame arrives at a portal and the destination is unknown. Note that a multi-hop cross route may share some of the same links as the spanning tree.
6) The spanning tree provides default routes before cross routes are established. Therefore, a MAP or MP does not need to buffer unicast frames, pending route discovery. In figure 2, for example, MP8 can send frames to MP10 before the cross route from MP8 to MP10 is established: The frames are forwarded inbound and bridged onto the distribution network by Portal1. Portal3 then bridges the frames from the distribution network, back into the wireless network, and forwards the frames outbound on the spanning tree path to MP10. The availability of a default spanning tree route greatly reduces the time that communications are delayed when a node roams. A node can simply select a new parent, in a spanning sub tree, and immediately communicate on the default paths. In contrast, when a node roams in a pure mesh network, the node must re-establish a mesh route with each correspondent node (e.g. via the AODV route discovery mechanism) before it can resume full communications.

In accordance with an aspect of the present invention, all wireless nodes are reliably registered with the WNR and with each MP/MAP on the path to the WNR, as described above for a WLCCP network. A registration transaction establishes a "path instance" that lies on a spanning tree branch. Each path instance is uniquely identified by a Path ID, which is assigned by the WNR. A registration request contains a "path cost" value that is incremented by each MAP on the inbound path to the WNR; therefore, the WNR can determine the aggregate spanning tree "path cost" for each node in the wireless network.

When a node roams to a new spanning tree branch, the WNR originates a deregistration transaction to delete the old path instance, as described above for a WLCCP network.

A parent MAP provides proxy STCRP services for STCRP-unaware STAs. A parent MAP registers each child STA with the WNR and a parent AP may establish 0 or more cross routes for a child STA. A WGB provides similar proxy STCRP services for Ethernet nodes on its attached secondary LAN. In figure 2, MAP4 must register STA1 with the WNR. MAP4 may originate a proxy Cross Route transaction, for STA1, to establish a cross route between STA1 and STA2, for example.

A "tightly-coupled" set of nodes may roam as a group. For example, a vehicle-mounted WGB and Ethernet nodes, on a secondary LAN in the vehicle, may comprise a group of tightly-coupled nodes. For such a group of tightly coupled nodes, an STCRP transaction message may contain a list of nodes. A single STCRP transaction, for example, can be used to establish a shared crows route for a list of nodes.

An aspect of the present invention contemplates four sets of cross route (CR) control messages. CR Setup Request and Reply messages, CR Route List Request and Reply messages, CR Delete Request and Reply messages and CR Error Request and Reply messages. A CR_SETRQ (CR Setup Request) message is sent toward a "target" node to establish a cross route from the target node to the "source" node. A CR_SETRP (CR Setup Reply) message is sent in the reverse direction to acknowledge a CR_SETRQ message and to establish a route from the source node to the target node. A CR_SETRQ message may contain QoS admissions control requests. If the WNR provides a "centralized route calculation" service then a CR_RLRQ (CR Route List Request), message is sent to the WNR to request a cross route list from a "source" node to a "target" node. The WNR sends a CR_RLRP (CR Route List Reply) to the CR_RLRQ originator. A successful CR_RLRP contains an ordered list of MAPs/MPs that provide an optimal cross route from the source node to the target node. A CR_DELRQ (CR Delete Request) message is generated to delete cross routes, as required, when a node roams. A CR_ERR (CR Error) message is used to clean up old invalid cross route fragments.

In an embodiment that uses cut centralized or root note for cross route setup, each MAP and MP must register its set of "neighbors", and the hop cost to each neighbor, with the WNR. In this context, two nodes are neighbors if a suitable single-hop radio link exists between the nodes. A radio link may be a spanning tree link or a "cross link". A simple STA has a single neighbor - its parent MAP.

A MAP or MP sends a CR_RLRQ message to the WNR to request a cross route list from a source node to a target node. The source node ID and target node ID are contained in the CR_RLRQ message. The "source" node may be the MAP or MP that originated the CR_RLRQ message or it may be an STCRP-unaware child STA.

When the WNR receives a CR_RLRQ message, it performs an algorithm to determine the shortest path, such as Dijkstra's Shortest Path Algorithm, to determine the shortest "cross route" from the source to the destination. The WNR then sends a CR_RLRP message to the transaction originator. If a "cross route" was not found, then the CR_RLRP message contains a "not found" status and the the existing spanning tree path is used to send frames to the destination. [Note that the destination may not be in the wireless network.] Otherwise, if a cross route was found, the CR_RLRP message contains a "successful" status and an ordered list of the MAPs and/or MPs on the optimal cross route from the source to the destination.

When the originator receives a successful CR_RLRP message, it sends a CR_SETRQ message toward the target node to establish a cross route from the target node to the source node. The CR_SETRQ message contains the ordered list of MAPs and/or MPs on the respective cross route. The CR_SETRQ message is sent, in order, to each MAP/MP in the list. When a MAP/MP receives a CR_SETRQ message it creates or updates a cross route table entry for the source node. When the last MAP/MP receives an in-order CR_SETRQ message it returns a CR_SETRP message to the originator to establish a cross route from the source node to the target node. When an MAP/MP receives an in-order CR_SETRP message, it creates or updates a cross route table entry for the target node. A bi-directional cross route is fully established when the originator receives the CR_SETRP message.

The cross route setup protocol can, optionally, be optimized. If an intermediate MAP/MP receives a CR_SETRQ message and the target node is in its spanning sub tree, then the MAP/MP can immediately send a CR_SETRP message (i.e. without forwarding the CR_SETRQ message outbound on the spanning tree branch).

Compared to other mesh routing protocols, the centralized method greatly reduces the messaging overhead for establishing a "mesh route" between two wireless nodes. When a node receives a CR_RL or CR_SET message, it forwards the message, at most, on a single link.

For embodiments that utilize distributed cross route discovery, any suitable mesh route discovery protocol (e.g. AODV) can be used for distributed cross route discovery; however, the mesh routing protocol must be augmented to support simple stations that do not support the mesh routing protocol. The CR_SETRQ/CR_SETRP protocol, described above, can be used to set up a cross route after it is discovered.

A mesh route discovery protocol can be optimized to utilize spanning tree path fragments. For example, a MAP does not need to "discover" a mesh path to a node in its spanning sub tree.

In accordance with an aspect of the present invention, a unidirectional "cross route" instance is uniquely identified by a CR ID (i.e. much like a topology tree path instance is identified by a Path ID). A CR ID is formed by concatenating a Path ID, assigned by the WNR, with a "cross route sequence number". The high-order bits of a CR ID contain the Path ID and the low order bits contain the sequence number. A CR sequence number is incremented whenever a CR_SETRQ or CR_SETRP message is generated to establish a new cross route for the source or target, respectively. The CR ID in a CR_SETRQ message is comprised of the "source" node's current Path ID and the source node's current sequence number. The CR ID in a CR_SETRP message is comprised of the "target" node's current Path ID and the target node's current sequence number. The CR ID that identifies a cross route is cached in cross route table entries in MAPs and MPs on the cross route. A received CR_SET, CR_DEL, or CR_ERR message is considered "out-of-order if the CR ID in the message is "older" than the CR ID in the respective route table entry. Out-of-order CR messages are discarded.

It is important to note that the Path ID, which comprises the high-order bits of CR ID, is assigned by the wireless network root; therefore, CR IDs are ordered consistently throughout the wireless network. In contrast, AODV "route identifiers" for a node cannot be ordered consistently, throughout a AODV mesh network, if parent MAPs independently generate "proxy" AODV route discovery messages, and corresponding route identifiers, for AODV-unware stations.

When a node roams, the old spanning tree path instance is deleted by a deregistration transaction, as described above. Any old cross routes for the node are also deleted. When a node is deregistered in a MAP, the MAP also deactivates any cross route table entry, where the node is "destination". The MAP then sends a Cross Route Delete Request (CR_DELRQ) message, on the "old" cross route, to delete the cross route to the destination node in other MAPs and MPs. The CR_ID in a CR_DELRQ is comprised of the node's new Path ID and a sequence ID of '0'. A CR_DELRQ message does not need to be sent reliably. When a MAP or MP receives a cross-routed frame and it does not have a cross route table entry for the destination address, the MAP or MP returns a Cross Route Error (CR_ERR) message on the reverse path to delete the invalid cross route.

In a WLCCP network, each AP establishes a trust relationship with the WDS via an EAP-based security protocol (e.g. EAP-LEAP) and an external security server. The WDS functions as a Kerberos-like KDC to establish a secure channel between any two APs in its domain. A "supplicant" AP requests security credentials from the WDS for a "destination" AP. When the supplicant receives the credentials for a destination AP, it performs a two-way handshake with the destination AP to establish mutual authentication and a secure channel. Each non-Root AP must establish mutual authentication and a secure channel with its parent AP, when it first attaches to the WLCCP topology tree. WLCCP messages are authenticated, and optionally encrypted, on a "hop-by-hop" basis using the security credentials shared by the immediate sender and the immediate receiver. The WLCCP security protocol is described in detail in U.S. Patent Application No. 10/417,653.

The WLCCP security protocol can easily be extended to support CR message authentication. Each MAP and MP can establish a trust relationship with the WNR. Each MAP and MP can then request security credentials, from the WNR, for each neighbor AP that is not a direct child in the spanning tree. The WLCCP two-way handshake can then be used to establish mutual authentication and a secure channel with each neighbor AP.

Advantages of the WLCCP-based security protocol include the following:
- It is very fast.
- It is localized. It is not necessary to access an external security server to establish a secure channel between any two nodes in the topology tree.
- The WLCCP two-way handshake does NOT rely on a distributed clock to prevent replays (i.e. as in in Kerberos).

As noted herein, an STCRP network can operate with or without a distribution network; a distribution network can be an Ethernet LAN, an IP network, or any combination of Ethernet LANs and an IP network. If the network does not contain a distribution network, then there are no "portals" and the WNR is in the spanning tree data path. A hybrid topology is possible. A distribution network may be used to inter-connect some spanning sub trees rooted at portals; and the WNR may be in the data path for other MAPs and MPs. [A hybrid topology is illustrated in the WLCCP specification.]

An example STCRP network, which does not include a distribution network, is shown in figure 3. In figure 3, MAPs 1-3 are attached to the WNR on wireless links and in this embodiment the WNR is in the spanning tree data path.

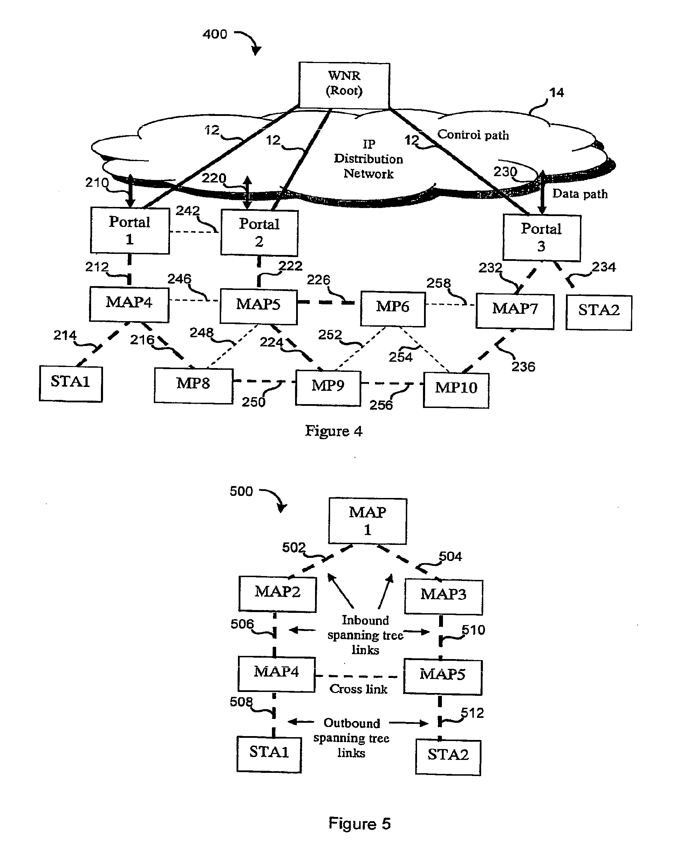

Figure 4, depicts an example STCRP network where the "distribution network" is an IP network. Note that a "data path" exists between each "portal" and the distribution network; a logical STCRP "control path" exists between each portal and the root of the STCRP topology tree (i.e. the WNR). The IP distribution network may be a metropolitan IP network or the Internet, for example.

If admissions control is enforced for an access category (AC) in nan 802.11e BSS, then each MN must request admission, to the local BSS, for its uplink and downlink streams that belong to the AC. In a wireless network that includes multi-hop spanning tree paths, each stream must also be admitted on each inbound link on the "default" spanning tree path to the nearest common ancestor of the stream correspondents. For example, if a MN is corresponding with an Ethernet node on the distribution network, then the MN's streams must be admitted by the MN's parent MAP and by each other MAP on the inbound path to the distribution network. A WLCCP Registration transaction can be used to request admission for a QoS Stream on the "default" spanning tree path for the QoS Stream.

A CR_SETRQ message may contain 0 or more QoS admissions control requests for 0 or more QoS streams for the "source" node. A CR_SETRQ does not need to contain admissions control requests for the "target" node. Each MAP/MP on the path of a CR_SETRQ must process each admissions control request. A stream is admitted on a cross route only if each MAP/MP on the cross route admits the stream.

A cross route always exists between correspondent wireless nodes. A cross route includes 1 or more "cross links" and it may include "outbound" spanning tree links, which lie on spanning tree path to one of the correspondents (see the figure 5). An uplink or downlink QoS stream does not need to be readmitted on such outbound spanning tree links when a cross route is established. A QoS stream must be admitted on each cross link. The bandwidth allocated for a QoS stream on an inbound spanning tree link is released when the QoS stream is moved to a cross route.

In the example illustrated in figure 5, MAP4 originated a "proxy" CR_SETRQ message, for STA1, to establish a cross route, between STA1 and STA2. The cross route lies on the path depicted in red and purple. The links depicted in purple are outbound spanning tree links, with respect to the cross route. After the cross route is establish, the bandwidth reservations for STA1's unicast QoS streams, where STA2 is the correspondent, are released on the "inbound" spanning tree path from MAP4 to MAP1; likewise, the bandwidth reservations for any of STA2's unicast QoS streams, where STA1 is the correspondent, are released on the inbound path from MAP5 to MAP1.

The CR_SETRQ message included admissions control requests for STA1's uplink and downlink unicast QoS streams, where STA2 is the correspondent. MAP5 admitted STA1's streams and indicated the "successful" admissions status in the corresponding CR_SETRP message. Note that it is NOT necessary to re-admit STA1's streams on the outbound spanning tree links. Admission control on a cross route is always applied to the "source" node. Therefore, it is not necessary to admit STA2's unicast QoS streams, where STA1 is the correspondent, on the cross route.

In figure 5, note that the cross link and the inbound spanning tree links may share the same radio channel. In that case, it may be necessary to release the bandwidth reservations on the inbound spanning tree links before the QoS streams can be admitted on the cross link.

In accordance with an aspect of the present invention, any STCRP-aware node can independently establish a single-hop cross route with an STCRP-aware neighbor, to which it has a cross link.

In accordance with an aspect of the present invention, any "ancestor" node, in an STCRP topology tree, can potentially establish a multi-hop cross route for any two nodes in its sub tree (i.e. the sub tree rooted at the "ancestor" node) using the centralized method described above. An ancestor node can extract and cache neighbor information contained in registration messages generated for nodes in its sub tree. If such "ancestor nodes" cache neighbor information, then it is only necessary to query the Wireless Network Root, for a cross route, if the WNR is the "nearest common ancestor" of the cross route end points. In general, a cross route can be calculated by the nearest common ancestor, of the cross route endpoints, which contains the necessary neighbor information. In figure 4, for example, if Portal 2 caches neighbor information, then it can determine a cross route between MP6 and MP9, since both MP6 and MP9 are in its sub tree. In figure 4, only the WNR can determine a cross route between MP6 and MAP7, since it is the only common ancestor of MP6 and MAP7, in the STCRP topology tree.

An "ancestor" node, which is in the data path of nodes in its sub tree, can automatically determine if a cross route should be established between two descendant nodes that are actively communicating. For example, an ancestor node can monitor high bandwidth streams, which are contained within its sub tree, and periodically attempt to calculate a cross route for such a high-bandwidth stream. (The ancestor node can use any suitable algorithm to rate-limit cross route calculations.) If an ancestor node determines that a more optimal cross route can be established, then the ancestor node can proactively "push" the cross route out to one of the descendant nodes (or to the parent AP of an STCRP-unaware descendant node) to trigger the descendant node (or parent AP) to establish a cross route.

Referring to Figure 2, there is illustrated an example network 200 configured in accordance with an aspect of the present invention. Network has a WNR at the root. The WNR is coupled by distribution network 14 to Ethernet Nodes EN1 and EN2 as well as to Portals Portal 1, Portal 2 and Portal 3. Portal 1, Portal 2 and Portal 3 are at the top of spanning trees 210, 220, 230 respectively. The distribution may suitably comprise any network topology, such as an Ethernet network and an Internet Protocol network.

In this embodiment, Portal 1, Portal 2 and Portal 3 are logically connected (as shown by lines 12) to the WNR. The WNR is not in the data path and when computing a path instance the WNR is not included in the path count. The first spanning tree 210 comprises Portal 1, MAP4, STA1, MP8. The second spanning 220 tree comprises Portal 2, MAP5, MP6 and MP9. The third spanning tree 230 comprises Portal 3, MAP7, MP10 and STA2.

The first branch of the spanning tree, branch 210 has Portal 1 at the root of the branch coupled to distribution network 14. Mesh Access Point (MAP) MAP4 is coupled to Portal 1 by wireless link 212. MAP4 is coupled to a non-Mesh Wireless Station (STA) STA1 by wireless link 214 and to Mesh Point (MP) MP8 by wireless link 216.

The second spanning tree 220 is coupled by portal 2 to distribution network 14. Portal 2 is connected to MAP5 by wireless link 222. MAP 5 is coupled to MP9 by wireless link 224.

The third spanning tree 230 is coupled by portal 3 to distribution network 14. Portal 3 is coupled to MAP7 by wireless link 232 and STA2 by wireless link 234. MP10 is coupled to MAP7 by wireless link MP10.

In addition to the spanning tree links, network 200 comprises several mesh capable links. These are links between neighboring AP's and/or mesh nodes. The links capable of being used as mesh-like cross route links include wireless link 242 between Portal 1 and Portal 2, wireless link 246 between MAP4 and MAP5, wireless link 248 between MAP5 and MP8, wireless link 250 between MP8 and MP9, wireless link 252 between MP9 and MP6, wireless link 254 between MP6 and MP10, wireless link 256 between MP9 and MP10, and wireless link 258 between MP6 and MAP7.

Each wireless node Portal 1, Portal 2, Portal 3, MAP4, MAP5, MP 6, MAP7, MP8, MP9, MP10, STA1 and STA2 comprise one or more wireless transceivers for sending and receiving data frames (packets). The wireless transceiver may be capable of sending frames on different frequencies. Furthermore, each wireless mesh capable node Portal 1, Portal 2, Portal 3, MAP4, MAP5, MP 6, MAP7, MP8, MP9 and MP10, maintains a route table that includes both spanning tree route entries and cross route entries.

Each wireless node Portal 1, Portal 2, Portal 3, MAP4, MAP5, MP 6, MAP7, MP8, MP9, MP10, STA1 and STA2 has at least one port coupled to a spanning tree network. As with a WLCCP network, preferably each node Portal 1, Portal 2, Portal 3, MAP4, MAP5, MP 6, MAP7, MP8, MP9, MAP10, STA1 and STA2 is directly coupled to one parent (ancestor) node in the spanning tree. Portals and MAPs may have a plurality of descendant nodes on the spanning tree.

When a wireless node Portal 1, Portal 2, Portal 3, MAP4, MAP5, MP 6, MAP7, MP8, MP9, MP10, STA1 and STA2 receives a frame from a source having a source address addressed to a destination having a destination address, the node utilizes its cross route table to determine whether it has a cross route entry for the destination. If the node does not have a cross route entry for the destination node then the frame is propagated on the spanning tree. If the node has a cross route entry for the destination, the frame is then routed on the appropriate cross route.

For example, assuming a cross route between MP9 and MAP 4, which includes cross link 246, has already been established, if MAP5 receives a frame from MP9 destined to MAP4, MAP5 looks up MAP4 in its route table. Because MAP5 has a cross route entry for MAP4, which points to a cross link (246), the frame is routed on the cross link 246 to MAP4. However, if MAP5 receives a frame addressed to Ethernet Node EN1, because there will be no cross route entry or spanning tree route entry for EN1 the frame is routed inbound through the spanning tree via wireless link 222 to Portal 1 for routing in distribution network 14.

The WNR can store a path instance identifier for each wireless network node, Portal 1, Portal 2, Portal 3, MAP4, MAP5, MP 6, MAP7, MP8, MP9, MP10, STA1 and STA2 in network 200. The WNR increments the path instance identifier for a node when the node is registered on a new path.

For each STCRP-aware node (portal, AP, mesh node, or WGB) the WNR may further store a list of neighbor STCRP-aware nodes, where a neighbor node is directly reachable via a single wireless link. For example, a WNR entry for MAP5 would have a neighbor list comprised of Portal 2, MAP4, MAP6, MAP8 and MAP9.

In addition to the WNR storing a neighbor list for every descendant portal and MAP, each portal and MAP, Portal 1, Portal 2, Portal 3, MAP4, MAP5, MAP7, can store neighbor lists for descendant nodes.

The WNR, or any of wireless nodes Portal 1, Portal 2, Portal 3, MAP4, MAP5, MP 6, MAP7, MP8, MP9 and MP10 can be configured to establish a cross route for a descendent node. For example, in network 200, if STA1 desires to initiate communication with STA2, a cross route request is sent to the WNR. Because there is not a more optimal cross route between STA1 and STA2, any frames between them are routed on their spanning trees 210, 230 respectively. However, if for example STA1 initiates communication with MP9, then WNR can automatically determine a more optimal cross route between STA1 and MP9 and "push" the cross route out to MAP4 or MP9. It should be noted that STA1 is a mesh (or cross route) unaware station; therefore, MAP4 will handle any cross route establishment for STA1. The WNR can use any suitable algorithm such as a Dijsktra shortest path algorithm which is well known in the art (see for example http://mathworld.wolfram.com/DijkstrasAlgorithm.html). For example paths between SSTA1 and MP10 can be one of STA1-MAP4- MAP5-MP9; STA1-MAP4-MP8-MP9; or STA1-MAP4-Portal1-Portal2-MAP5-MP9. Using a simple shortest path algorithm, where path "cost" is based on the hop count, either STA1-MAP4-MAP5-MP9; or STA1-MAP4-MP8-MP9 would be selected. However, other algorithms may include factors such as load balancing or available bandwidth in determining the optimal route between STA1 and MP10.

However, any wireless node Portal 1, Portal 2, Portal 3, MAP4, MAP5, MP 6, MAP7, MP8, MP9, MP10 in network 200 that is a common ancestor to the source and destination nodes, in the STRCP topology tree, can establish a cross route between the source and destination nodes. [In network 200, as illustrated, there are no multiple-hop cross routes that contained within a single sub tree; therefore, only the WNR can establish multi-hop cross routes via the centralized method.]

In accordance with an aspect of the present invention, if a root node determines that the destination of an inbound packet is not within its spanning tree, the root node forwards the packet onto the distribution network. For example, in network 200, if Portal 1 receives an inbound packet for EN1, EN2, Portal 3 or STA2, the packet is forwarded on distribution network 14. Note that if Portal 1 forwards an inbound frame destined to STA2, for example, onto the distribution network, then Portal 3 will relay the frame outbound from the distribution network to STA2.

In accordance with an aspect of the present invention, a mesh frame is not forwarded on to the distribution network 14. For example, if Portal 3 receives a unicast Mesh frame and Portal 3 does not have a route table entry for the destination address, then the frame is discarded and not routed on distribution network 14. As another example, if Portal 1 receives a mesh frame on the spanning tree link 212, but it is not for wireless link 242, the frame is discarded and not forwarded on to distribution network 14.

In accordance with an aspect of the present invention, if a node roams, its cross route entries are deleted. For example, if STA1 and MP10 are communicating via a cross-routed path that includes MAP 4 (wireless link 214, a spanning tree link), MAP5 (wireless link 246, a cross route), MP9 (wireless link 224, a spanning tree link) to MP10 (wireless link 256, a cross route), if STA1 roams, the spanning tree route entries and the cross route entries for STA1 are updated. For example, if STA1 roams, spanning tree link 214 as well as cross routes on wireless links 246 and 256 are deleted.

In accordance with an aspect of the present invention, an ancestor node will route a unicast frame for a descendant node on the spanning tree to the descendant node. For example, if MAP5 receives a frame for MP9, the frame is routed on the spanning tree (wireless link 224) to MP9.

In accordance with an aspect of the present invention, a wireless node MAP4, MAP5, MP 6, MAP7, MP8, MP9, MP10 will route a frame inbound on its spanning tree if the destination is unknown. It should be noted that Portal 1, Portal 2, Portal 3 will not forward a "mesh" frame onto the distribution network 14 if the destination is unknown and as stated herein *supra,* mesh frames are not routed on the distribution network.

In accordance with an aspect of the present invention, the method for handling cross route discovery messages by a network node, e.g. Portal 1, Portal 2, Portal 3, MAP4, MAP5, MP 6, MAP7, MP8, MP9, MP10 will depend on the type of discovery protocol implemented on network 200. For example, if the centralized method is utilized, cross route requests are always propagated inbound on the spanning tree towards distribution network 14 and the WNR. For example, if MP8 sends a cross route request for MP10, the packet is sent inbound to MAP4, because MAP4 is not an ancestor of MP10, it forwards the discovery request to Portal 1 on wireless link 212, and similarly because Portal 1 is not an ancestor of MP10 the discovery request to distribution network 12 where it will be processed by the WNR. However, if the cross route request is for a descendant node, the ancestor node may service the request.

If network 200 uses a distributed cross route discovery method, the route discovery request is forwarded on all cross link ports and inbound ports except for the port the route discovery message was received and a port coupled to the distribution network. For example, when using the distributed method if MAP5 receives a discovery request from MP9, the request is send on spanning tree wireless links 222 and 226 as well as on cross link wireless links 246 and 248. However, when Portal 2 receives the request, it will only forward the request on wireless link 242. For example, if MAP5 receives a cross route discovery request on wireless link 2246, 248 or 226 for MP9, MAP5 will forward the request on wireless link 224 to MP9. Similarly, if the discovery request is received by Portal 2, it will be forwarded on wireless link 222 to MAP5 and then wireless link 224 to MP9.

In accordance with an aspect of the present invention, when a wireless node (e.g. Portal 1, Portal 2, Portal 3, MAP4, MAP5, MP 6, MAP7, MP8, MP9, MP10) establishes a cross route, a cross route identification is established for the cross route. The cross route identification is cached in the route table in each STCRP-aware node on the cross route. In a preferred embodiment, the cross identification comprises a path identification that is established by of the WNR and a cross route sequence number. If a node receives a message with a cross route identification that is older that the cross route identification stored in the cross route table, the message is discarded.

In accordance with an aspect of the present invention, bandwidth can be reserved and adjusted for a quality of service (QoS) stream. For example, a wireless node wireless network node can reserve bandwidth for a quality of service stream on an inbound path of the spanning tree and the wireless node can release the bandwidth reserved for the quality of service stream on an inbound path of the spanning tree responsive to the quality of service stream moved to a cross route. For example, MAP4 can reserve bandwidth for an inbound QoS stream from MP8. If MP8 routes the stream instead to MAP5 via cross route 248, then MAP4 can de-allocate the reserved bandwidth.

FIG. 3 is a block diagram illustrating an example of a completely wireless ad-hoc spanning tree cross route protocol network 300 that is not coupled to a distribution network. In this embodiment, the WNR is the root of the single spanning tree. WNR is coupled to MAP1 by wireless link 310, MAP2 by wireless link 320 and MAP3 by wireless link 330.

FIG. 4 is a block diagram of a spanning tree cross route protocol network 400 where the distribution network is an IP distribution network. Portal 1, Portal 2 and Portal 3 communicate with the WNR using IP packets. The WNR can be located remotely from portals Portal 1, Portal 2 and Portal 3. As is the case with an Ethernet distribution network, the WNR is not in the data path of spanning trees 210, 220, 230.

FIG. 5 is a block diagram of a wireless network 500 that is not coupled to a distribution network employing a spanning tree cross route protocol. In this network MAP1 functions as the root node. Mesh nodes MAP2 and MAP3 are coupled to MAP1 on spanning tree wireless links 502, 504 respectively. A cross link 514 is illustrated between MAP4 and MAP5. Descendant nodes of MAP2 are MAP4 coupled by wireless link 506 and STA1 coupled to MAP4 by wireless link 508. Descendant nodes of MAP3 are MAP5 coupled by wireless link 510 and STA2 coupled by wireless link 512 to MAP5.

With reference to MAP4, wireless link 502 and 506 are the inbound spanning tree links while wireless link 508 is an outbound spanning tree link. With reference to MAP5, inbound spanning tree links are wireless links 504, 510 and outbound spanning tree is wireless link 512. A cross link 514 is shown between MAP4 and MAP5. For example, if a frame is sent from STA1 to MAP4 inbound, MAP4 determines if the destination is routed through cross link 514. If the destination is routed through cross link 514 then the frame is forwarded on cross link 514, otherwise it is routed inbound on wireless link 506 and if necessary on wireless link 502. Similarly, when MAP4 receives an outbound frame on wireless link 506, if the destination has an entry in MAP4's cross route table, then it is routed on cross link 514, otherwise it is routed on wireless link 508 (or any other descendant spanning tree link where the destination node is attached).

For example, if STA1 sends a frame for STA2, the frame is routed on wireless link 514 to MAP4. If MAP4 has an entry for STA2 in its cross route table (e.g. on wireless link 514) then the frame is routed on wireless link 514 to MAP5. Because STA2 is a descendant of MAP5, MAP5 routes the frame outbound to STA2. If STA1 sends a frame to MAP1 or MAP2 MAP4 routes the packet inbound on wireless link 506 because it does not have a route table entry for MAP1 or MAP2.

STCRP can be used to increase the wireless bandwidth used to relay frames between two wired LANs. In figure 1, for example, the wired "secondary LAN" is attached to the distribution LAN over a multi-hop wireless path via the "WGB". The WGB is effectively a "portal" to the secondary LAN. The wireless bandwidth used to relay frames between the distribution LAN and the secondary LAN could be increased, for example, by adding a second WGB, to the secondary LAN, and a corresponding second wireless path to the primary LAN. But such a topology, with two WGBs, introduces a routing loop. A spanning tree, by definition, is a structure that does not contain a loop; therefore, a simple spanning tree algorithm cannot resolve the loop introduced by the second WGB. An STCRP network contains both spanning tree paths and "routed paths". The structure of the spanning tree prevents looping on spanning tree paths. Looping is prevented on routed paths simple by ensuring that a node is on a cross route at most once. In figure 1, a second WGB, and corresponding second wireless path, can be added to the secondary LAN as follows: A first "designated" WGB can be configured as the "designated bridge" for the secondary LAN. Any other "cross route" WGB attached to the secondary LAN only provides to the secondary LAN over cross routes. The designated WGB attaches to the spanning tree and provides a spanning tree path to the secondary LAN. Other cross route WGBs establish "cross routes", in proxy, for nodes on the secondary LAN. For example, a second WGB, attached to the secondary LAN, could establish a cross route for EN3 to the distribution LAN through AP-9, AP-5, and Root AP-2. An inter-WGB protocol is needed to negotiate the assignment of nodes to cross routes and corresponding cross route WGBs. [A designated WGB could also establish cross routes for nodes on the secondary LAN.]

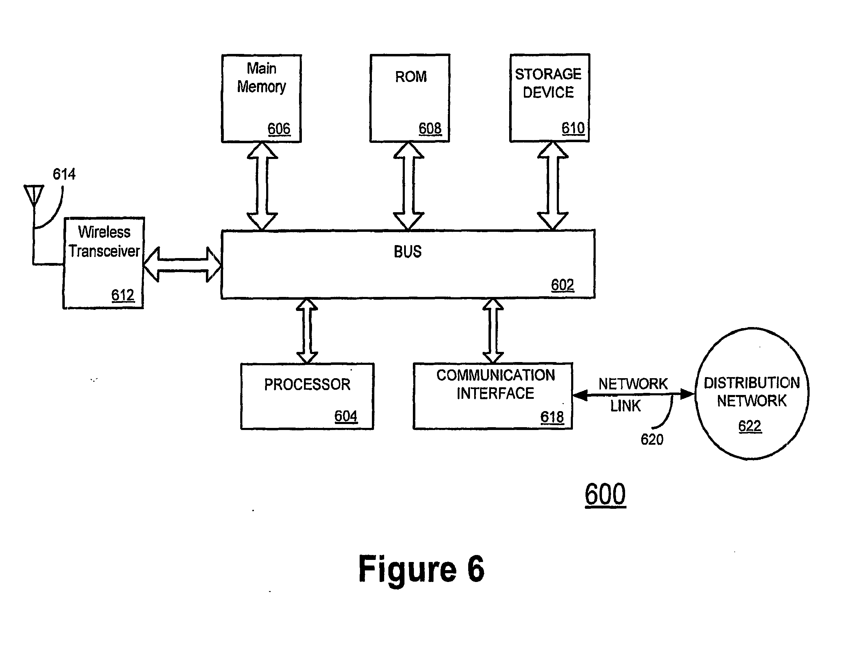

FIG. 6 is a block system of computer system 600 upon which an embodiment of the invention may be implemented. Computer system 600 can provide the functionality and control for a root node (e.g. a WNR), Portals (e.g. Portal 1, Portal 2 Portal 3), Access Points such as Mesh Access Points (MAP4, MAP5, MAP7), Mesh Points (MP6, MP8, MP9, MP10) and/or wireless stations (STA1, STA2)

Computer system 600 includes a bus 602 or other communication mechanism for communicating information and a processor 604 coupled with bus 602 for processing information. Computer system 100 also includes a main memory 606, such as random access memory (RAM) or other dynamic storage device coupled to bus 602 for storing information and instructions to be executed by processor 604. Main memory 606 also may be used for storing a temporary variable or other intermediate information during execution of instructions to be executed by processor 604. Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

The invention is related to the use of computer system 100 for implementing a spanning tree cross route protocol. According to one embodiment of the invention, the spanning tree cross route protocol is provided by computer system 600 in response to processor 604 executing one or more sequences of one or more instructions contained in main memory 606. Such instructions may be read into main memory 606 from another computer-readable medium, such as storage device 610. Execution of the sequence of instructions contained in main memory 606 causes processor 604 to perform the process steps described herein. One or more processors in a multi-processing arrangement may also be employed to execute the sequences of instructions contained in main memory 606. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 604 for execution. Such a medium may take many forms, including but not limited to non-volatile media, volatile media, and transmission media. Non-volatile media include for example optical or magnetic disks, such as storage device 610. Volatile media include dynamic memory such as main memory 606. Transmission media include coaxial cables, copper wire and fiber optics, including the wires that comprise bus 602. Transmission media can also take the form of acoustic or light waves such as those generated during radio frequency (RF) and infrared (IR) data communications. Common forms of computer-readable media include for example floppy disk, a flexible disk, hard disk, magnetic cards, paper tape, any other physical medium with patterns of holes, a RAM, a PROM, an EPROM, a FLASHPROM, any other memory chip or cartridge, a carrier wave as described hereinafter, or any other medium from which a computer can read.

Various forms of computer-readable media may be involved in carrying one or more sequences of one or more instructions to processor 604 for execution. For example, the instructions may initially be borne on a magnetic disk of a remote computer. The remote computer can load the instructions into its dynamic memory and send the instructions over a telephone line using a modem. A modem local to computer system 600 can receive the data on the telephone line and use an infrared transmitter to convert the data to an infrared signal. An infrared detector coupled to bus 602 can receive the data carried in the infrared signal and place the data on bus 602. Bus 602 carries the data to main memory 606 from which processor 604 retrieves and executes the instructions. The instructions received by main memory 606 may optionally be stored on storage device 610 either before or after execution by processor 604.

In the case of a portal, access point, mesh access point or other infrastructure node coupled to a distribution network, computer system 600 also includes a communication interface 618 coupled to bus 602. Communication interface 618 provides a two-way data communication coupling to a network link 620 that is connected to a distribution network 622. For example, communication interface 618 may be an integrated services digital network (ISDN) card or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic, or optical signals that carry digital data streams representing various types of information.

Network link 620 typically provides data communication through one or more networks to other data devices. For example, network link 620 may provide a connection through local network 122 to a WNR and/or an AAA server. Distribution network 622 may comprise one or more networks, including but not limited to an Ethernet Network and an IP network. For example, computer system 600 may be coupled to an Ethernet Network that is coupled to an IP network, or directly coupled to either an IP or Ethernet Network.

Computer system 600 can include additional logic for performing the various functions described herein. "Logic", as used herein, includes but is not limited to hardware, firmware, software and/or combinations of each to perform a function (s) or an action(s), and/or to cause a function or action from another component. For example, based on a desired application or need, logic may include a software controlled microprocessor, discrete logic such as an application specific integrated circuit (ASIC), a programmable/programmed logic device, memory device containing instructions, or the like, or combinational logic embodied in hardware. Logic may also be fully embodied as software.

If computer system 600 is used to implement a wireless infrastructure node (e.g. a portal such as Portal 1, Portal 2, or Portal 3; Access Point, Mesh Access Point such a s MAP4, MAP5, MAP7; Mesh Point such as MP6, MP8, MP9, MP10; or a wireless station such as STA1, STA2) then a wireless transceiver 612 is also coupled to bus 602. Wireless transceiver 612 sends and receives wireless signals, e.g. RF, IR, Optical, on antenna 614. For signals received on antenna 614, wireless transceiver 612 performs any frequency converting, demodulation, decoding, and/or analog to digital (A/D) conversion that is desired. For signals being sent on antenna 614, wireless transceiver performs any digital to analog (D/A), coding, modulation, and/or frequency conversion desired. Furthermore, processor 604 can control the operation of wireless transceiver 612. For example, packets received on communication interface 618 can be stored in memory 606 and processor 604 can forward the packets from main memory 606 to wireless transceiver 612 for transmission. Furthermore, processor 604 can control the operating parameters of wireless transceiver 612.

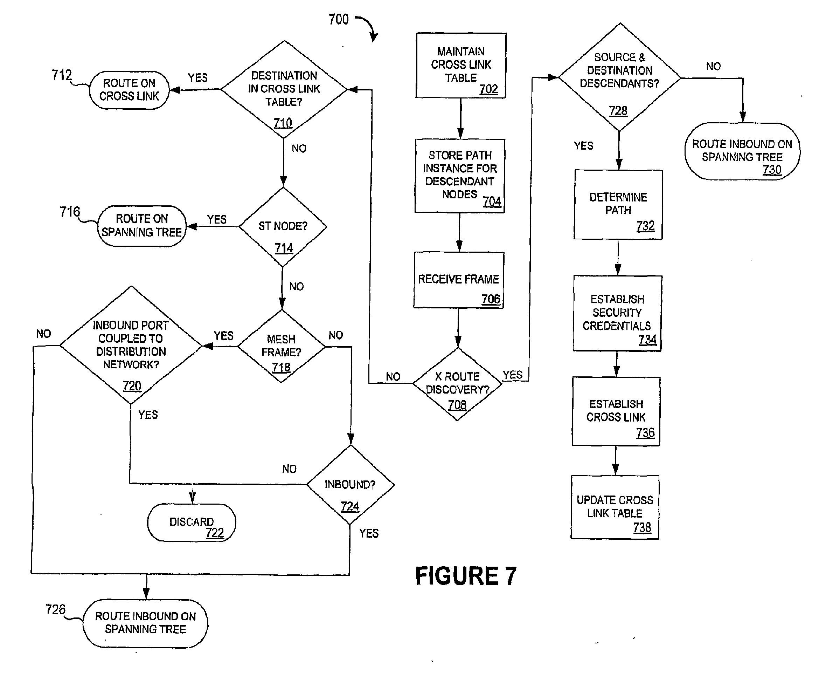

In view of the foregoing structural and functional features described above, a methodology 700 in accordance with various aspects of the present invention will be better appreciated with reference to FIG. 7. While, for purposes of simplicity of explanation, the methodology of FIG. 7 is shown and described as executing serially, it is to be understood and appreciated that the present invention is not limited by the illustrated order, as some aspects could, in accordance with the present invention, occur in different orders and/or concurrently with other aspects from that shown and described herein. Moreover, not all illustrated features may be required to implement a methodology in accordance with an aspect the present invention. Embodiments of the present invention are suitably adapted to implement the methodology in hardware, software, or a combination thereof.

At 702, a cross route table is maintained. The cross route table contains entries for cross routes currently established at the node. As illustrated at 704, the path instance for descendant nodes are stored. The path instance can include security credentials established between the node and the descendant nodes, as well as path costs. In addition, the path instance, or another table entry for the descendant node may also include neighboring nodes that the descendant is capable of establishing communications.

Whenever a node roams, 702 and 704 are again performed. Cross routes to the roaming node are deleted. Also, path instances for the node are updated, a new path instance is established and the old path instance is reliably deleted.

At 706, a frame is received. At 708 it is determined whether the frame is a cross route discovery frame.

If at 708 it is determined that the frame is not a cross route discovery frame (NO), at 710 it is determined whether there is an entry for the destination of the frame in the cross route table. If there is an entry for the destination in the cross route table (YES) then the frame is routed on the appropriate cross link at 712.

If at 710 it is determined that the destination for the frame is not in the cross route table (NO), at 714 it is determined whether the destination node is a descendant node. If at 714 it is determined that the destination is a descendant node (YES) then at 716 the frame is routed on the spanning three. It should also be noted that a broadcast or multicast frame received on an inbound port is routed on outbound spanning tree ports.

If at 714 it is determined that the destination is not on the spanning tree (NO), at 718 it is determined whether the frame is a mesh frame. If the frame is a mesh frame (YES) then at 720 it is determined whether the inbound port is coupled to a distribution network. If at 720 it is determined that the inbound frame is not coupled to a distribution network (NO), at 726 the frame is routed inbound on the spanning tree. It at 720 it is determined that the inbound port is connected to a distribution network (YES), at 722 the frame is discarded.

If at 718 it is determined that the frame is not a mesh frame (NO) then at 724 it is determined whether the frame is an inbound frame. If the frame is an inbound frame (YES) at 726 the frame is routed inbound on the spanning tree. If at 724 it is determined that the fame is not an inbound frame (NO) then it is discarded at 722.

If at 708 it is determined that the frame is a cross route discovery frame (YES), then at 728 it is determined whether the source and destination nodes are descendants. If at 728 it is determined that the source and destination nodes are not descendants (NO) then the discovery packet is routed inbound on the spanning tree.

If the node is in a network that uses a distributed cross route discovery technique, the discovery request may be routed on other outbound and cross link ports as well, except for the port which received the discovery request and any port connected to a distribution network.

If at 728 it is determined that the source and destination nodes are descendants (YES), at 732 a path between the source and destination nodes is determined. The path can be a least cost path (for example using a Dijsktra shortest path algorithm), or selected based on other criteria such as available bandwidth and load.

At 734, security credentials are established between the source node and the destination node. The security nodes are forwarded down the spanning tree(s) to the source node and destination node, preferably using pre-established, secure, trusted links.

At 736 the cross route between the source node and the destination node is established. In accordance with an aspect of the present invention, if the node is reserving bandwidth for a quality of service (QoS) stream on an inbound path of the spanning tree, the bandwidth reserved for the quality of service stream on the inbound path can be released when the cross route is established.

At 738 the cross route table is updated (e.g. cached) with an entry for the cross route between the source node and the destination node. The cross route identification can comprise a path identification that is established by a nearest common ancestor of the source node and the destination node, and a sequence number. The cross route identification can enable a node to determine whether a frame is being routed to a current cross route. For example, at 708 or 710 the cross route identification can also be checked and a frame with a cross route identification that is older that the cross route identification stored in the cross route table is discarded.

What has been described above includes exemplary implementations of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the scope of the appended claims interpreted in accordance with the breadth to which they are fairly, legally and equitably entitled.

## Claims

1. A method of routing in a wireless network arranged in an underlying tree topology, with a root node and at least one cross link that exists between branches of the tree topology, wherein the tree topology provides default data forwarding paths and a cross route, comprised of the at least one cross link, is established to provide more optimal forwarding paths; the method comprising:
sending, by an originator node, a query to an ancestor node for a cross route from a cross route source node to a cross route target node, the ancestor node being a common ancestor of the cross route source node and the cross route target node in the tree topology;
receiving, from the ancestor node, a reply message containing an indication if a cross route to the cross route target node can be established responsive to the query;
receiving the cross route from the ancestor node, when the cross route exists, wherein the cross route is comprised of an ordered list of nodes; and
routing packets to the cross route target node using the cross route.

2. A method according to claim 1, comprising:
maintaining a cross route table;
receiving a packet on a wireless network port, the packet having a packet source node address and a packet destination node address;
determining whether a cross route entry exists for the packet destination node in the cross route table;
forwarding the packet on a spanning tree port responsive to determining no cross route entry exists for the packet destination node address in the cross route table; and
forwarding the packet on a cross link port responsive to determining a cross route entry exists for the packet destination node address.

3. A method according to claim 1, further comprising:
receiving the query for the cross route at the ancestor node;
determining, by the ancestor node, a path from the cross route source node to the cross route target node; and
establishing the cross route by the ancestor node.

4. A method according to claim 1, wherein the ancestor node is the root node.

5. A method according to claim 1, wherein the ancestor node is the nearest common ancestor of the cross route source node and the cross route target node.

6. A method according to claim 3, wherein the determining a path from the cross route source node to the cross route target node uses a Dijsktra shortest path algorithm.

7. A method according to claim 2, wherein the topology comprises one or more spanning sub trees coupled to a distribution network, further comprising routing the packet on the distribution network responsive to determining the packet destination node is not in a spanning sub tree.

8. A method according to claim 2, further comprising deleting a cross route in the cross route table responsive to one of the group consisting of the cross route source node and the cross route target node roaming.

9. A method according to claim 2, further comprising routing a unicast packet on paths of the tree topology when the packet destination node is a descendant.

10. A method according to claim 2, further comprising forwarding a packet received on a cross route inbound on tree topology paths if the packet destination node address is unknown.

11. A method according to claim 2, further comprising propagating a cross route discovery message only on tree topology paths.

12. A method according to claim 2, further comprising:
establishing a cross route identification for a cross route; and
caching the cross route identification in the cross route table;
wherein the cross route identification comprises a path identification that is established by a nearest common ancestor of the cross route source node and the cross route target node, and a sequence number.

13. A method according to claim 12, further comprising discarding a message with a cross route identification that is older that the cross route identification stored in the cross route table.

14. A method according to claim 1, further comprising establishing security credentials for the cross route source node and the cross route target node to communicate with each other by a nearest common ancestor to the cross route source node and the cross route target node.

15. A method according to claim 1, further comprising:
reserving bandwidth for a quality of service stream on an inbound path of the tree topology; and
releasing the bandwidth reserved for the quality of service stream on an inbound path of the tree topology responsive to the quality of service stream being moved to a cross route.

16. A method according to claim 1, wherein one or more nodes in the topology are coupled to a distribution network, further comprising:
receiving a cross route discovery message; and
propagating the cross route discovery message on all cross route ports, all outbound ports and the inbound port except for the port the cross route discovery message was received on and a port coupled to the distribution network.

17. A method of configuring routes in a wireless network arranged in an underlying tree topology, with a root node and at least one cross link that exists between branches of the tree topology, wherein the tree topology provides default data forwarding paths and a cross route, comprised of the at least one cross link, is established to provide more optimal forwarding paths; the method comprising, at a first node:
receiving, from an originator node, a query for a cross route from a cross route source node to a cross route target node, the first node being a common ancestor of the cross route source node and the cross route target node in the tree topology;
determining if a cross route to the cross route target node can be established responsive to the query;
sending a reply message to the originator node, which contains an indication if the cross route exists; and
sending the cross route to the originator node, when the cross route exists, wherein the cross route is comprised of an ordered list of nodes.

18. A wireless network node for use in a wireless network arranged in an underlying tree topology, with a root node and at least one cross link that exists between branches of the tree topology, wherein the tree topology provides default data forwarding paths and a cross route, comprised of the at least one cross link, is established to provide more optimal forwarding paths; the wireless network node comprising:
means for sending a query to an ancestor node for a cross route from a cross route source node to a cross route target node, the ancestor node being a common ancestor of the cross route source node and the cross route target node in the tree topology;
means for receiving, from the ancestor node, a reply message containing an indication if a cross route to the cross route target node can be established responsive to the query;
means for receiving the cross route from the ancestor node, when the cross route exists, wherein the cross route is comprised of an ordered list of nodes; and
means for routing packets to the cross route target node using the cross route.

19. A wireless network node according to claim 18, further comprising:
a wireless transceiver;
a cross route table;
at least one port coupled to a spanning tree network;
wherein the wireless network node is configured to be responsive to receiving a packet sent from a packet source node addressed to a packet destination node to determine whether an entry exists for the packet destination node in the cross route table;
wherein the network node is responsive to route the packet on a cross route responsive to an entry existing in the cross route table for the packet destination node; and
wherein the network node is responsive to route the packet on the at least one spanning tree port responsive to no entry existing in the cross route table for the packet destination node.

20. A wireless network node according to claim 10, wherein the root node is not in the data path.

21. A wireless network node according to claim 18, wherein the wireless network node is a root node coupled to a distribution network.

22. A wireless network node according to claim 21, wherein the distribution network is one of the group consisting of an Ethernet network and an Internet Protocol network.

23. A wireless network node according to claim 18, wherein the wireless network node is a mesh node configured to provide a cross route for a non-mesh node in a subtree of the tree topology below the wireless network node.

24. A wireless network node according to any of claims 18 to 23, configured to perform a method as claimed in any of claims 1 to 17.

25. A system for configuring routes in a wireless network topology, the network topology comprising:
an underlying tree topology, with a single root node; and
at least one cross link that exists between branches of the tree topology;
wherein the tree topology provides default data forwarding paths and a cross route, comprised of the at least one cross link, is established to provide more optimal forwarding paths; the system comprising:
means for receiving, from an originator node in the wireless network, a query for a cross route from a cross route source node to a cross route target node, the query being received at a common ancestor of the cross route source node and cross route target node in the tree topology;
means for determining if a cross route to the cross route target node can be established responsive to the query;
means for sending a reply message to the originator node, which contains an indication if the cross route exists; and,
means for sending the cross route to the originator node, when the cross route exists, wherein the cross route is comprised of an ordered list of nodes.

26. The system of claim 25, wherein nodes in the wireless network are reliably registered with the root node and cross routes are established for registered nodes.

27. The system of claim 26, further comprising:
a wireless node configured to register a set of neighbor nodes with the root node, wherein each neighbor node is directly reachable via a single wireless link; and
wherein the root node maintains a database that contains entries for wireless nodes and neighbor sets for wireless nodes.

28. The system as in claim 27 wherein the root node is at one of the group consisting of the root of the entire wireless network topology tree and the root of a sub tree in the network topology tree.

29. The system as in claim 28, wherein the root node determines that a cross route can be established for two registered nodes, which are actively communicating, by examining the set of neighbors for registered nodes in its database and where the root node sends a cross route to one of the registered nodes.

30. The system as in claim 25, wherein the ancestor node is the root node.

31. The system as in claim 25, wherein the ancestor node is the nearest common ancestor of the cross route source node and the cross route target node.

32. The system as in claim 25, wherein the originator node is one of the group consisting of a node that is communicating with the cross route target node, and a parent node in the topology tree of a node that is communicating with the cross route target node.

33. The system as in claim 25, wherein wireless nodes establish security credentials with the root node, further comprising:
the root node configured to allocate security credentials for a first node and a second neighbor node; and
wherein the security credentials shared by the first node and the second neighbor node are used to protect messages that are used to establish a cross route that includes the two nodes.

34. The system as in claim 25,
wherein at least one portal is used to relay data packets between a wireless network and a distribution network; where the root of the network topology tree is located on the distribution network;
wherein a logical link exists between each portal and the root of the network topology; and wherein a wireless spanning sub tree is rooted at each portal.

35. The system as in claim 25, further comprising a node coupled to a branch of the tree topology;
wherein the node maintains a route table that is comprised of spanning tree route entries for descendant nodes in the topology tree, and cross route entries for nodes that are accessible via a cross route;
where the node examines the route table responsive to receiving a unicast packet;
wherein the node is responsive to forward the packet on a corresponding cross route to the packet destination responsive to finding a cross route entry for the packet destination node;
wherein the node forwards the packet outbound on a corresponding spanning tree path to the packet destination responsive to the node having a spanning tree route entry for the packet destination node; and
wherein the node performs one of the group consisting of forwarding the packet inbound on the spanning tree path to the root and discarding the packet responsive to the node not having a route entry for the packet destination.

36. The system as in claim 35,
wherein the route table comprises a cross route entry and a spanning tree route entry for the same packet destination node; and
wherein the node is responsive to selectively forward packets destined to the packet destination node on both the cross route path and the spanning tree path.

37. The system as in claim 35,
wherein a cross route for a node is uniquely identified by a node identifier and a cross route identifier;
wherein a high-order component of the cross route identifier is comprised of a spanning tree path instance identifier allocated for the node by the network topology root; and
wherein the spanning path instance identifier uniquely identifies the node's spanning tree path instance within the network tree topology.

38. The system as in claim 37,
wherein the cross route identifier is contained in messages that are used to establish and delete cross routes and cross route table entries;
wherein nodes use cross route identifiers to order cross route messages; and
wherein a node does not update a cross route table entry when it receives a cross route message responsive to the cross route identifier in the table entry for the respective node being newer than the cross route identifier in the message.

## Patentansprüche

1. Verfahren zum Routen in einem Drahtlosnetzwerk, das in einer zugrunde liegenden Baumtopologie angeordnet ist, mit einem Wurzelknoten und wenigstens einer Querverbindung, die zwischen Zweigen der Baumtopologie existiert, wobei die Baumtopologie Default-Datenweiterleitungspfade bereitstellt und eine Querroute, die aus der wenigstens einen Querverbindung besteht, hergestellt wird, um optimalere Weiterleitungspfade bereitzustellen, wobei das Verfahren umfasst:
Senden, durch einen Absenderknoten, einer Anfrage an einen Vorfahrknoten bezüglich einer Querroute von einem Querrouten-Quellenknoten an einen Querrouten-Zielknoten, wobei der Vorfahrknoten ein gemeinsamer Vorfahr des Querrouten-Quellenknotens und des Querrouten-Zielknotens in der Baumtopologie ist;
Empfangen, von dem Vorfahrknoten, einer Antwortnachricht, die eine Angabe enthält, ob eine Querroute zu dem Querrouten-Zielknoten in Reaktion auf die Anfrage hergestellt werden kann;
Empfangen der Querroute von dem Vorfahrknoten, wenn die Querroute existiert, wobei die Querroute aus einer geordneten Liste von Knoten besteht; und
Routen von Paketen an den Querrouten-Zielknoten unter Verwendung der Querroute.

2. Verfahren nach Anspruch 1, das umfasst:
Unterhalten einer Querroutentabelle;
Empfangen eines Pakets auf einem Drahtlosnetzwerkport, wobei das Paket eine Paket-Quellenknotenadresse und eine Paket-Zielknotenadresse hat;
Ermitteln, ob für den Paketzielknoten ein Querrouteneintrag in der Querroutentabelle existiert;
Weiterleiten des Pakets auf einen Spannbaumport im Ansprechen auf das Ermitteln, dass kein Querrouteneintrag für die Paket-Zielknotenadresse in der Querroutentabelle existiert; und
Weiterleiten des Pakets auf einen Querverbindungsport im Ansprechen auf das Ermitteln, dass ein Querrouteneintrag für die Paket-Zielknotenadresse existiert.

3. Verfahren nach Anspruch 1, das des Weiteren umfasst:
Empfangen der Anfrage nach der Querroute an dem Vorfahrknoten;
Ermitteln, durch den Vorfahrknoten, eines Pfads von dem Querrouten-Quellenknoten an den Querrouten-Zielknoten; und
Herstellen der Querroute durch den Vorfahrknoten.

4. Verfahren nach Anspruch 1, wobei der Vorfahrknoten der Wurzelknoten ist.

5. Verfahren nach Anspruch 1, wobei der Vorfahrknoten der nächste gemeinsame Vorfahr des Querrouten-Quellenknotens und des Querrouten-Zielknotens ist.

6. Verfahren nach Anspruch 3, wobei das Ermitteln eines Pfads von dem Querrouten-Quellenknoten zu dem Querrouten-Zielknoten einen Dijsktra-Algorithmus des kürzesten Pfads verwendet.

7. Verfahren nach Anspruch 2, wobei die Topologie einen oder mehrere Spannunterbäume aufweist, die mit einem Verteilungsnetzwerk verbunden sind, und das Verfahren des Weiteren das Routen des Pakets auf dem Verteilungsnetzwerk im Ansprechen auf das Ermitteln umfasst, dass der Paket-Zielknoten nicht in einem Spannunterbaum ist.

8. Verfahren nach Anspruch 2, das des Weiteren das Entfernen einer Querroute in der Querroutentabelle im Ansprechen darauf umfasst, dass einer der Gruppe bestehend aus dem Querrouten-Quellenknoten und dem Querrouten-Zielknoten roamt.

9. Verfahren nach Anspruch 2, das des Weiteren das Routen eines Unicast-Pakets auf Pfaden der Baumtopologie umfasst, wenn der Paket-Zielknoten ein Nachfahre ist.

10. Verfahren nach Anspruch 2, das des Weiteren das Weiterleiten eines Pakets, das auf einer Querroute empfangen wird, eingehend auf Baumtopologiepfaden umfasst, wenn die Paket-Zielknotenadresse unbekannt ist.

11. Verfahren nach Anspruch 2, das des Weiteren das Übertragen einer Querrouten-Ermittlungsnachricht nur auf Baumtopologiepfaden umfasst.

12. Verfahren nach Anspruch 2, das des Weiteren umfasst:
Erzeugen einer Querrouten-Kennung für eine Querroute; und
Cachen der Querrouten-Kennung in der Querroutentabelle;
wobei die Querrouten-Kennung eine Pfadkennung aufweist, die von einem nächsten gemeinsamen Vorfahr des Querrouten-Quellenknotens und des Querrouten-Zielknotens erzeugt wird, und eine Sequenzzahl.

13. Verfahren nach Anspruch 12, das des Weiteren das Verwerfen einer Nachricht mit einer Querrouten-Kennung umfasst, die älter als die in der Querroutentabelle gespeicherte Querrouten-Kennung ist.

14. Verfahren nach Anspruch 1, das des Weiteren das Erzeugen von Sicherheitsberechtigungsnachweisen für den Querrouten-Quellenknoten und den Querrouten-Zielknoten umfasst, um durch einen nächsten gemeinsamen Vorfahr für den Querrouten-Quellenknoten und den Querrouten-Zielknoten miteinander zu kommunizieren.

15. Verfahren nach Anspruch 1, das des Weiteren umfasst:
Reservieren von Bandbreite für einen Dienstgütestrom auf einem eingehenden Pfad der Baumtopologie; und
Freigeben der für den Dienstgütestrom auf einem eingehenden Pfad der Baumtopologie reservierten Bandbreite im Ansprechen darauf, dass der Dienstgütestrom an eine Querroute bewegt wird.

16. Verfahren nach Anspruch 1, wobei einer oder mehrere Knoten in der Topologie mit einem Verteilungsnetzwerk verbunden sind, und das Verfahren des Weiteren umfasst:
Empfangen einer Querrouten-Ermittlungsnachricht; und
Übertragen der Querrouten-Ermittlungsnachricht auf alle Querroutenports, alle ausgehenden Ports und den eingehenden Port, außer den Port, auf dem die Querrouten-Ermittlungsnachricht empfangen worden ist, und einen Port, der mit dem Verteilungsnetzwerk verbunden ist.

17. Verfahren zum Konfigurieren von Routen in einem Drahtlosnetzwerk, das in einer zugrunde liegenden Baumtopologie angeordnet ist, mit einem Wurzelknoten und wenigstens einer Querverbindung, die zwischen Zweigen der Baumtopologie existiert, wobei die Baumtopologie Default-Datenweiterleitungspfade bereitstellt und eine Querroute, die aus der wenigstens einen Querverbindung besteht, hergestellt wird, um optimalere Weiterleitungspfade bereitzustellen, wobei das Verfahren, an einem ersten Knoten, umfasst:
Empfangen, von einem Absenderknoten, einer Anfrage bezüglich einer Querroute von einem Querrouten-Quellenknoten an einen Querrouten-Zielknoten, wobei der erste Knoten ein gemeinsamer Vorfahr des Querrouten-Quellenknotens und des Querrouten-Zielknotens in der Baumtopologie ist;
Ermitteln, ob eine Querroute zu dem Querrouten-Zielknoten in Reaktion auf die Anfrage hergestellt werden kann;
Senden einer Antwortnachricht an den Absenderknoten, die eine Angabe enthält, ob die Querroute existiert;
Senden der Querroute an den Absenderknoten, wenn die Querroute existiert, wobei die Querroute aus einer geordneten Liste von Knoten besteht.

18. Drahtlosnetzwerkknoten zur Verwendung in einem Drahtlosnetzwerk, das in einer zugrunde liegenden Baumtopologie angeordnet ist, mit einem Wurzelknoten und wenigstens einer Querverbindung, die zwischen Zweigen der Baumtopologie existiert, wobei die Baumtopologie Default-Datenweiterleitungspfade bereitstellt und eine Querroute, die aus der wenigstens einen Querverbindung besteht, hergestellt wird, um optimalere Weiterleitungspfade bereitzustellen, wobei der Drahtlosnetzwerkknoten aufweist:
eine Einrichtung zum Senden einer Anfrage an einen Vorfahrknoten bezüglich einer Querroute von einem Querrouten-Quellenknoten an einen Querrouten-Zielknoten, wobei der Vorfahrknoten ein gemeinsamer Vorfahr des Querrouten-Quellenknotens und des Querrouten-Zielknotens in der Baumtopologie ist;
eine Einrichtung zum Empfangen, von dem Vorfahrknoten, einer Antwortnachricht, die eine Angabe enthält, ob eine Querroute zu dem Querrouten-Zielknoten in Reaktion auf die Anfrage hergestellt werden kann;
eine Einrichtung zum Empfangen der Querroute von dem Vorfahrknoten, wenn die Querroute existiert, wobei die Querroute aus einer geordneten Liste von Knoten besteht; und
eine Einrichtung zum Routen von Paketen an den Querrouten-Zielknoten unter Verwendung der Querroute.

19. Drahtlosnetzwerkknoten nach Anspruch 18, der des Weiteren aufweist:
einen Drahtlostransceiver;
eine Querroutentabelle;
wenigstens einen Port, der mit einem Spannbaumnetzwerk verbunden ist;
wobei der Drahtlosnetzwerkknoten dazu konfiguriert ist, auf das Empfangen eines Pakets anzusprechen, das von einem Paket-Quellenknoten gesendet und an einen Paket-Zielknoten adressiert ist, um zu ermitteln, ob für den Paket-Zielknoten in der Querroutentabelle ein Eintrag existiert;
wobei der Netzwerkknoten anspricht, um das Paket auf eine Querroute zu routen, im Ansprechen darauf, dass für den Paket-Zielknoten ein Eintrag in der Querroutentabelle existiert; und
wobei der Netzwerkknoten anspricht, um das Paket auf den wenigstens einen Spannbaumport zur routen, im Ansprechen darauf, dass für den Paket-Zielknoten kein Eintrag in der Querroutentabelle existiert.

20. Drahtlosnetzwerkknoten nach Anspruch 18, wobei der Wurzelknoten nicht in dem Datenpfad ist.

21. Drahtlosnetzwerkknoten nach Anspruch 18, wobei der Drahtlosnetzwerkknoten ein Wurzelknoten ist, der mit einem Verteilungsnetzwerk verbunden ist.

22. Drahtlosnetzwerkknoten nach Anspruch 21, wobei das Verteilungsnetzwerk eines der Gruppe bestehend aus einem Ethernet Netzwerk und einem Internet Protocol Netzwerk ist.

23. Drahtlosnetzwerkknoten nach Anspruch 18, wobei der Drahtlosnetzwerkknoten ein Maschenknoten ist, der dazu konfiguriert ist, eine Querroute für einen Nichtmaschenknoten in einem Unterbaum der Baumtopologie unter dem Drahtlosnetzwerkknoten bereitzustellen.

24. Drahtlosnetzwerkknoten nach einem der Ansprüche 18 bis 23, der dazu konfiguriert ist, ein Verfahren nach einem der Ansprüche 1 bis 17 durchzuführen.

25. System zum Konfigurieren von Routen in einer Drahtlosnetzwerktopologie, wobei die Netzwerktopologie aufweist:
eine zugrunde liegende Baumtopologie mit einem einzigen Wurzelknoten; und
wenigstens eine Querverbindung, die zwischen Zweigen der Baumtopologie existiert;
wobei die Baumtopologie Default-Datenweiterleitungspfade bereitstellt und eine Querroute, die aus der wenigstens einen Querverbindung besteht, hergestellt wird, um optimalere Weiterleitungspfade bereitzustellen, wobei das System aufweist:
eine Einrichtung zum Empfangen, von einem Absenderknoten in dem Drahtlosnetzwerk, einer Anfrage bezüglich einer Querroute von einem Querrouten-Quellenknoten an einen Querrouten-Zielknoten, wobei die Anfrage an einem gemeinsamen Vorfahr des Querrouten-Quellenknotens und des Querrouten-Zielknotens in der Baumtopologie empfangen wird;
eine Einrichtung zum Ermitteln, ob eine Querroute zu dem Querrouten-Zielknoten in Reaktion auf die Anfrage hergestellt werden kann;
eine Einrichtung zum Senden einer Antwortnachricht an den Absenderknoten, die eine Angabe enthält, ob die Querroute existiert; und
eine Einrichtung zum Senden der Querroute an den Absenderknoten, wenn die Querroute existiert, wobei die Querroute aus einer geordneten Liste von Knoten besteht.

26. System nach Anspruch 25, wobei Knoten in dem Drahtlosnetzwerk zuverlässig bei dem Wurzelknoten registriert werden und Querrouten für registrierte Knoten hergestellt werden.

27. System nach Anspruch 26, das des Weiteren aufweist:
einen Drahtlosknoten, der dazu konfiguriert ist, einen Satz von Nachbarknoten bei dem Wurzelknoten zu registrieren, wobei jeder Nachbarknoten direkt über eine einzige Drahtlosverbindung erreichbar ist; und
wobei der Wurzelknoten eine Datenbank unterhält, die Einträge für Drahtlosknoten und Nachbarsätze für Drahtlosknoten aufweist.

28. System nach Anspruch 27, wobei der Wurzelknoten sich an einem der Gruppe bestehend aus der Wurzel des gesamten Drahtlosnetzwerktopologiebaums und der Wurzel eines Unterbaums in dem Netzwerktopologiebaum befindet.

29. System nach Anspruch 28, wobei der Wurzelknoten bestimmt, dass eine Querroute für zwei registrierte Knoten, die aktiv kommunizieren, hergestellt werden kann, indem er den Satz von Nachbarn für registrierte Knoten in seiner Datenbank überprüft, und wobei der Wurzelknoten eine Querroute an einen der registrierten Knoten sendet.

30. System nach Anspruch 25, wobei der Vorfahrknoten der Wurzelknoten ist.

31. System nach Anspruch 25, wobei der Vorfahrknoten der nächste gemeinsame Vorfahr des Querrouten-Quellenknotens und des Querrouten-Zielknotens ist.

32. System nach Anspruch 25, wobei der Absenderknoten einer der Gruppe bestehend aus einem Knoten, der mit dem Querrouten-Zielknoten kommuniziert, und einem Elternknoten in dem Topologiebaum eines Knotens ist, der mit dem Querrouten-Zielknoten kommuniziert.

33. System nach Anspruch 25, wobei Drahtlosknoten
Sicherheitsberechtigungsnachweise bei dem Wurzelknoten erstellen, und das des Weiteren aufweist:
dass der Wurzelknoten dazu konfiguriert ist,
Sicherheitsberechtigungsnachweise für einen ersten Knoten und einen zweiten Nachbarknoten zuzuteilen; und
wobei die von dem ersten Knoten und dem zweiten Nachbarknoten gemeinsam verwendeten Sicherheitsberechtigungsnachweise verwendet werden, um Nachrichten zu schützen, die verwendet werden, um eine Querroute herzustellen, die die beiden Knoten enthält.

34. System nach Anspruch 25,
wobei wenigstens ein Portal verwendet wird, um Datenpakete zwischen einem Drahtlosnetzwerk und einem Verteilungsnetzwerk zu übertragen, wobei die Wurzel des Netzwerktopologiebaums sich auf dem Verteilungsnetzwerk befindet;
wobei zwischen jedem Portal und der Wurzel der Netzwerktopologie eine logische Verbindung existiert; und wobei ein Drahtlosspannunterbaum an jedem Portal verwurzelt ist.

35. System nach Anspruch 25, das des Weiteren einen Knoten aufweist, der mit einem Zweig der Baumtopologie verbunden ist;
wobei der Knoten eine Routentabelle unterhält, die aus Spannbaum-Routeneinträgen für Nachfahrknoten in dem Topologiebaum besteht, und Querrouteneinträgen für Knoten, die über eine Querroute erreichbar sind;
wobei der Knoten die Routentabelle im Ansprechen auf das Empfangen eines Unicast-Pakets prüft;
wobei der Knoten anspricht, um das Paket auf einer entsprechenden Querroute an das Paketziel weiterzuleiten, im Ansprechen auf das Finden eines Querrouteneintrags für den Paket-Zielknoten;
wobei der Knoten das Paket ausgehend auf einem entsprechenden Spannbaumpfad an das Paketziel weiterleitet, im Ansprechen darauf, dass der Knoten einen Spannbaum-Routeneintrag für den Paket-Zielknoten hat; und
wobei der Knoten eines der Gruppe bestehend aus dem Weiterleiten des Pakets eingehend auf dem Spannbaumpfad zu der Wurzel und dem Verwerfen des Pakets im Ansprechen darauf, dass der Knoten für das Paketziel keinen Routeneintrag hat, durchführt.

36. System nach Anspruch 35,
wobei die Routentabelle einen Querrouteneintrag und einen Spannbaumrouteneintrag für denselben Paket-Zielknoten aufweist; und
wobei der Knoten anspricht, um Pakete, die für den Paket-Zielknoten bestimmt sind, selektiv sowohl auf dem Querroutenpfad als auch dem Spannbaumpfad weiterzuleiten.

37. System nach Anspruch 35,
wobei eine Querroute für einen Knoten eindeutig durch eine Knotenkennung und eine Querroutenkennung identifiziert wird;
wobei eine Komponente hoher Ordnung der Querroutenkennung aus einer Spannbaumpfadinstanzkennung besteht, die für den Knoten durch die Netzwerktopologiewurzel zugeteilt wird; und
wobei die Spannbaumpfadinstanzkennung die Spannbaumpfadinstanz des Knotens in der Netzwerkbaumtopologie eindeutig identifiziert.

38. System nach Anspruch 37,
wobei die Querroutenkennung in Nachrichten enthalten ist, die zum Herstellen und Entfernen von Querrouten und Querrouten-Tabelleneinträgen verwendet werden;
wobei Knoten Querroutenkennungen verwenden, um Querroutennachrichten zu ordnen; und
wobei ein Knoten einen Querrouten-Tabelleneintrag nicht aktualisiert, wenn er eine Querroutennachricht empfängt, im Ansprechen darauf, dass die Querroutenkennung in dem Tabelleneintrag für den entsprechenden Knoten neuer ist, als die Querroutenkennung in der Nachricht.

## Revendications

1. Procédé d'acheminement dans un réseau sans fil agencé dans une topologie arborescente sous-jacente, avec un noeud racine et au moins une liaison transversale qui existe entre des branches de la topologie arborescente, dans lequel la topologie arborescente fournit des chemins de réacheminement de données par défaut et un itinéraire transversal, comprenant l'au moins une liaison transversale, est établi pour fournir des chemins de réacheminement plus optimaux ; le procédé comprenant :
l'envoi, par un noeud initiateur, d'une requête à un noeud ancêtre pour un itinéraire transversal d'un noeud source d'itinéraire transversal à un noeud cible d'itinéraire transversal, le noeud ancêtre étant un ancêtre commun du noeud source d'itinéraire transversal et du noeud cible d'itinéraire transversal dans la topologie arborescente;
la réception, en provenance du noeud ancêtre, d'un message de réponse contenant une indication du fait qu'un itinéraire transversal vers le noeud cible d'itinéraire transversal puisse être établi ou non en réponse à la requête ;
la réception de l'itinéraire transversal en provenance du noeud ancêtre, quand l'itinéraire transversal existe, dans lequel l'itinéraire transversal comprend une liste ordonnée de noeuds; et
l'acheminement de paquets au noeud cible d'itinéraire transversal en utilisant l'itinéraire transversal.

2. Procédé selon la revendication 1, comprenant :
le maintien d'une table d'itinéraires transversaux ;
la réception d'un paquet sur un port de réseau sans fil, le paquet ayant une adresse de noeud source de paquets et une adresse de noeud de destination de paquets ;
la détermination du fait qu'une entrée d'itinéraire transversal existe ou non pour le noeud de destination de paquets dans la table d'itinéraires transversaux ;
le réacheminement du paquet sur un port d'arbre recouvrant en réponse à la détermination du fait qu'aucune entrée d'itinéraire transversal n'existe pour l'adresse de noeud de destination de paquets dans la table d'itinéraires transversaux ; et
le réacheminement du paquet sur un port de liaison transversale en réponse à la détermination du fait qu'une entrée d'itinéraire transversal existe pour l'adresse de noeud de destination de paquets.

3. Procédé selon la revendication 1, comprenant en outre :
la réception de la requête pour l'itinéraire transversal au niveau du noeud ancêtre;
la détermination, par le noeud ancêtre, d'un chemin du noeud source d'itinéraire transversal au noeud cible d'itinéraire transversal ; et
l'établissement de l'itinéraire transversal du noeud ancêtre.

4. Procédé selon la revendication 1, dans lequel le noeud ancêtre est le noeud racine.

5. Procédé selon la revendication 1, dans lequel le noeud ancêtre est le plus proche ancêtre commun du noeud source d'itinéraire transversal et du noeud cible d'itinéraire transversal.

6. Procédé selon la revendication 3, dans lequel la détermination d'un chemin du noeud source d'itinéraire transversal au noeud cible d'itinéraire transversal utilise un algorithme du plus court chemin Dijsktra.

7. Procédé selon la revendication 2, dans lequel la topologie comprend un ou plusieurs sous-arbres à recouvrement couplés à un réseau de distribution, comprenant en outre l'acheminement du paquet sur le réseau de distribution en réponse à la détermination du fait que le noeud de destination de paquets ne soit pas un sous-arbre recouvrant.

8. Procédé selon la revendication 2, comprenant en outre la suppression d'un itinéraire transversal dans la table d'itinéraires transversaux en réponse à un du groupe constitué de l'itinérance du noeud source d'itinéraire transversal et du noeud cible d'itinéraire transversal.

9. Procédé selon la revendication 2, comprenant en outre l'acheminement d'un paquet à destination unique sur des chemins de la topologie arborescente quand le noeud de destination de paquets est un descendant.

10. Procédé selon la revendication 2, comprenant en outre le réacheminement d'un paquet reçu sur un itinéraire transversal entrant sur des chemins de topologie arborescente si l'adresse de noeud de destination de paquet est inconnue.

11. Procédé selon la revendication 2, comprenant en outre la propagation d'un message de découverte d'itinéraire transversal seulement sur des chemins de topologie arborescente.

12. Procédé selon la revendication 2, comprenant en outre :
l'établissement d'une identification d'itinéraire transversal pour un itinéraire transversal ; et
la mise en cache de l'identification d'itinéraire transversal dans la table d'itinéraires transversaux ;
dans lequel l'identification d'itinéraire transversal comprend une identification de chemin qui est établie par un plus proche ancêtre commun du noeud source d'itinéraire transversal et du noeud cible d'itinéraire transversal et un numéro séquentiel.

13. Procédé selon la revendication 12, comprenant en outre le rejet d'un message avec une identification d'itinéraire transversal qui est plus ancienne que l'identification d'itinéraire transversal stockée dans la table d'itinéraires transversaux.

14. Procédé selon la revendication 1, comprenant en outre l'établissement de garanties de sécurité pour que le noeud source d'itinéraire transversal et le noeud cible d'itinéraire transversal communiquent entre eux par un plus proche ancêtre commun au noeud source d'itinéraire transversal et au noeud cible d'itinéraire transversal.

15. Procédé selon la revendication 1, comprenant en outre:
la réservation d'une largeur de bande pour une qualité de flux de services sur un chemin entrant de la topologie arborescente; et
la libération de la largeur de bande réservée pour la qualité de flux de services sur un chemin entrant de la topologie arborescente en réponse au fait que la qualité de flux de services soit déplacée vers un itinéraire transversal.

16. Procédé selon la revendication 1, dans lequel un ou plusieurs noeuds dans la topologie sont couplés à un réseau de distribution, comprenant en outre :
la réception d'un message de découverte d'itinéraire transversal ; et
la propagation du message de découverte d'itinéraire transversal sur tous les ports d'itinéraire transversal, tous les ports sortants et le port entrant sauf pour le port sur lequel le message de découverte d'itinéraire transversal a été reçu et un port couplé au réseau de distribution.

17. Procédé de configuration d'itinéraires dans un réseau sans fil agencé dans une topologie arborescente sous-jacente, avec un noeud racine et au moins une liaison transversale qui existe entre des branches de la topologie arborescente, dans lequel la topologie arborescente fournit des chemins de réacheminement de données par défaut et un itinéraire transversal, comprenant l'au moins une liaison transversale, est établi pour fournir des chemins de réacheminement plus optimaux ; le procédé comprenant, au niveau d'un premier noeud :
la réception, en provenance d'un noeud initiateur, d'une requête pour un itinéraire transversal d'un noeud source d'itinéraire transversal à un noeud cible d'itinéraire transversal, le premier noeud étant un ancêtre commun du noeud source d'itinéraire transversal et du noeud cible d'itinéraire transversal dans la topologie arborescente;
la détermination du fait qu'un itinéraire transversal vers le noeud cible d'itinéraire transversal puisse être établi ou non en réponse à la requête ;
l'envoi d'un message de réponse au noeud initiateur, qui contient une indication du fait que l'itinéraire transversal existe ou non ; et
l'envoi de l'itinéraire transversal au noeud initiateur, quand l'itinéraire transversal existe, dans lequel l'itinéraire transversal comprend une liste ordonnée de noeuds.

18. Noeud de réseau sans fil pour une utilisation dans un réseau sans fil agencé dans une topologie arborescente sous-jacente, avec un noeud racine et au moins une liaison transversale qui existe entre des branches de la topologie arborescente, dans lequel la topologie arborescente fournit des chemins de réacheminement de données par défaut et un itinéraire transversal, comprenant l'au moins une liaison transversale, est établi pour fournir des chemins de réacheminement plus optimaux ; le noeud de réseau sans fil comprenant :
des moyens pour envoyer à un noeud ancêtre une requête pour un itinéraire transversal d'un noeud source d'itinéraire transversal à un noeud cible d'itinéraire transversal, le noeud ancêtre étant un ancêtre commun du noeud source d'itinéraire transversal et du noeud cible d'itinéraire transversal dans la topologie arborescente;
des moyens pour recevoir, en provenance du noeud ancêtre, un message de réponse contenant une indication du fait qu'un itinéraire transversal vers le noeud cible d'itinéraire transversal puisse être établi ou non en réponse à la requête ;
des moyens pour recevoir l'itinéraire transversal en provenance du noeud ancêtre, quand l'itinéraire transversal existe, dans lequel l'itinéraire transversal comprend une liste ordonnée de noeuds ; et
des moyens pour acheminer des paquets au noeud cible d'itinéraire transversal en utilisant l'itinéraire transversal.

19. Noeud de réseau sans fil selon la revendication 18, comprenant en outre :
un émetteur-récepteur sans fil ;
une table d'itinéraires transversaux ;
au moins un port couplé à un réseau à arbre recouvrant ;
dans lequel le noeud de réseau sans fil est configuré pour être sensible à la réception d'un paquet envoyé à partir d'un noeud source de paquets adressé à un noeud de destination de paquets pour déterminer le fait qu'une entrée existe ou non pour le noeud de destination de paquets dans la table d'itinéraires transversaux ;
dans lequel le noeud de réseau est sensible pour acheminer le paquet sur un itinéraire transversal en réponse au fait qu'une entrée existe dans la table d'itinéraires transversaux pour le noeud de destination de paquets ; et
dans lequel le noeud de réseau est sensible pour acheminer le paquet sur l'au moins un port d'arbre recouvrant en réponse au fait qu'aucune entrée n'existe dans la table d'itinéraires transversaux pour le noeud de destination de paquets.

20. Noeud de réseau sans fil selon la revendication 18, dans lequel le noeud racine n'est pas dans le chemin de données.

21. Noeud de réseau sans fil selon la revendication 18, dans lequel le noeud de réseau sans fil est un noeud racine couplé à un réseau de distribution.

22. Noeud de réseau sans fil selon la revendication 21, dans lequel le réseau de distribution est un du groupe constitué d'un réseau Ethernet et d'un réseau de protocole Internet.

23. Noeud de réseau sans fil selon la revendication 18, dans lequel le noeud de réseau sans fil est un noeud de maille configuré pour fournir un itinéraire transversal pour un noeud non de maille dans un sous-arbre de la topologie arborescente au-dessous du noeud de réseau sans fil.

24. Noeud de réseau sans fil selon l'une quelconque des revendications 18 à 23, configuré pour réaliser un procédé selon l'une quelconque des revendications 1 à 17.

25. Système pour configurer des itinéraires dans une topologie de réseau sans fil, la topologie de réseau comprenant :
une topologie arborescente sous-jacente, avec un noeud racine ; et
au moins une liaison transversale qui existe entre des branches de la topologie arborescente;
dans lequel la topologie arborescente fournit des chemins de réacheminement de données par défaut et un itinéraire transversal, comprenant l'au moins une liaison transversale, est établi pour fournir des chemins de réacheminement plus optimaux; le système comprenant :
des moyens pour recevoir, en provenance d'un noeud initiateur dans le réseau sans fil, une requête pour un itinéraire transversal d'un noeud source d'itinéraire transversal à un noeud cible d'itinéraire transversal, la requête étant reçue au niveau d'un ancêtre commun du noeud source d'itinéraire transversal et du noeud cible d'itinéraire transversal dans la topologie arborescente;
des moyens pour déterminer le fait qu'un itinéraire transversal vers le noeud cible d'itinéraire transversal puisse être établi ou non en réponse à la requête ;
des moyens pour envoyer un message de réponse au noeud initiateur, lequel contient une indication du fait que l'itinéraire transversal existe ou non ; et
des moyens pour envoyer l'itinéraire transversal au noeud initiateur, quand l'itinéraire transversal existe, dans lequel l'itinéraire transversal comprend une liste ordonnée de noeuds.

26. Système selon la revendication 25, dans lequel des noeuds dans le réseau sans fil sont enregistrés de manière fiable avec le noeud racine et des itinéraires transversaux sont établis pour des noeuds enregistrés.

27. Système selon la revendication 26, comprenant en outre :
un noeud sans fil configuré pour enregistrer un ensemble de noeuds voisins avec le noeud racine, dans lequel chaque noeud voisin est directement accessible via une unique liaison sans fil ; et
dans lequel le noeud racine maintient une base de données qui contient des entrées pour des noeuds sans fil et des ensembles de voisins pour des noeuds sans fil.

28. Système selon la revendication 27, dans lequel le noeud racine est au moins un du groupe constitué de la racine de la totalité de l'arbre de topologie de réseau sans fil et la racine d'un sous-arbre dans l'arbre de topologie de réseau.

29. Système selon la revendication 28, dans lequel le noeud racine détermine qu'un itinéraire transversal peut être établi pour deux noeuds enregistrés, qui communiquent activement, en examinant l'ensemble de voisins pour des noeuds enregistrés dans sa base de données et où le noeud racine envoie un itinéraire transversal à un des noeuds enregistrés.

30. Système selon la revendication 25, dans lequel le noeud ancêtre est le noeud racine.

31. Système selon la revendication 25, dans lequel le noeud ancêtre est le plus proche ancêtre commun du noeud source d'itinéraire transversal et du noeud cible d'itinéraire transversal.

32. Système selon la revendication 25, dans lequel le noeud initiateur est un du groupe constitué d'un noeud qui est en communication avec le noeud cible d'itinéraire transversal et un noeud parent dans l'arbre de topologie d'un noeud qui est en communication avec le noeud cible d'itinéraire transversal.

33. Système selon la revendication 25, dans lequel des noeuds sans fil établissent des garanties de sécurité avec le noeud racine, comprenant en outre :
le noeud racine configuré pour allouer des garanties de sécurité pour un premier noeud et un deuxième noeud voisin ; et
dans lequel les garanties de sécurité partagées pour le premier noeud et le deuxième noeud voisin sont utilisées pour protéger des messages qui sont utilisés pour établir un itinéraire transversal qui comprend les deux noeuds.

34. Système selon la revendication 25,
dans lequel au moins un portail est utilisé pour réacheminer des paquets de données entre un réseau sans fil et un réseau de distribution ; où la racine de l'arbre de topologie de réseau est située sur le réseau de distribution ;
dans lequel un lien logique existe entre chaque portail et la racine de la topologie de réseau ; et dans lequel un sous-arbre recouvrant sans fil est enraciné au niveau de chaque portail.

35. Système selon la revendication 25, comprenant en outre un noeud couplé à une branche de la topologie arborescente;
dans lequel le noeud maintient une table d'itinéraires qui est constituée d'entrées d'itinéraire d'arbre recouvrant pour des noeuds descendants dans l'arbre de topologie et d'entrées d'itinéraire transversal pour des noeuds qui sont accessibles via un itinéraire transversal ;
où le noeud examine la table d'itinéraires en réponse à la réception d'un paquet à destination unique ;
dans lequel le noeud est sensible pour réacheminer le paquet sur un itinéraire transversal correspondant à la destination de paquet en réponse à la découverte d'une entrée d'itinéraire transversal pour le noeud de destination de paquet ;
dans lequel le noeud réachemine le paquet sortant sur un chemin d'arbre recouvrant correspondant à la destination de paquet en réponse au fait que le noeud ait une entrée d'itinéraire d'arbre recouvrant pour le noeud de destination de paquets ; et
dans lequel le noeud effectue un du groupe constitué du réacheminement du paquet entrant sur le chemin d'arbre recouvrant à la racine et le rejet du paquet en réponse au fait que le noeud n'ait pas une entrée d'itinéraire pour la destination de paquet.

36. Système selon la revendication 35,
dans lequel la table d'itinéraires comprend une entrée d'itinéraire transversal et une entrée d'itinéraire d'arbre recouvrant pour le même noeud de destination de paquets ; et
dans lequel le noeud est sensible pour réacheminer sélectivement des paquets destinés au noeud de destination de paquets à la fois sur le chemin d'itinéraire transversal et sur le chemin d'arbre recouvrant.

37. Système selon la revendication 35,
dans lequel un itinéraire transversal pour un noeud est identifié de manière unique par un identifiant de noeud et un identifiant d'itinéraire transversal ;
dans lequel un composant d'ordre supérieur de l'identifiant d'itinéraire transversal comprend un identifiant d'instance de chemin d'arbre recouvrant alloué pour le noeud par la racine de topologie de réseau ; et
dans lequel l'identifiant d'instance de chemin d'arbre recouvrant identifie de manière unique l'instance de chemin d'arbre recouvrant du noeud à l'intérieur de la topologie arborescente de réseau.

38. Système selon la revendication 37,
dans lequel l'identifiant d'itinéraire transversal est contenu dans des messages qui sont utilisés pour établir et supprimer des itinéraires transversaux et des entrées de table d'itinéraires transversaux ;
dans lequel des noeuds utilisent des identifiants d'itinéraire transversal pour ordonner des messages d'itinéraire transversal ; et
dans lequel un noeud n'actualise pas une entrée de table d'itinéraires transversaux quand il reçoit un message d'itinéraire transversal en réponse au fait que l'identifiant d'itinéraire transversal dans l'entrée de table pour le noeud respectif soit plus récent que l'identifiant d'itinéraire transversal dans le message.
